(19) Europäisches Patentamt
European Patent Office
Office européen des brevets

(11) EP 4 620 987 A1

(12) **EUROPEAN PATENT APPLICATION**
published in accordance with Art. 153(4) EPC

(43) Date of publication:
**24.09.2025 Bulletin 2025/39**

(21) Application number: **24865945.0**

(22) Date of filing: **13.09.2024**

(51) International Patent Classification (IPC):
***C08F 220/30*** *(2006.01)* ***C08F 222/10*** *(2006.01)*
***C08F 216/12*** *(2006.01)* ***C08F 2/44*** *(2006.01)*
***C08F 2/50*** *(2006.01)* ***C08K 5/20*** *(2006.01)*
***C08K 5/3432*** *(2006.01)*

(52) Cooperative Patent Classification (CPC):
**C08F 2/44; C08F 2/50; C08F 216/12; C08F 220/30; C08F 222/10; C08K 5/20; C08K 5/3432**

(86) International application number:
**PCT/KR2024/096150**

(87) International publication number:
**WO 2025/058506 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.09.2023 KR 20230121554**
**22.09.2023 KR 20230127192**
**22.09.2023 KR 20230127259**
**12.09.2024 KR 20240124634**

(71) Applicant: **LG CHEM, LTD.**
**Seoul 07336 (KR)**

(72) Inventors:
- **CHOI, Il Hwan**
  **Daejeon 34122 (KR)**
- **YIM, Hye Jin**
  **Daejeon 34122 (KR)**
- **LEE, Seungmook**
  **Daejeon 34122 (KR)**
- **BAE, Jaesoon**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) RESIN COMPOSITION AND ARTICLE COMPRISING SAME

(57) The present specification provides a resin composition containing: a resin containing a unit represented by Chemical Formula 1; a resin containing a unit represented by Chemical Formula 2; and at least two types of UV stabilizers, wherein the resin composition exhibits a color difference change rate ($Eab_1$) on the first day (n = 1) of ultraviolet irradiation, defined by Equation 1, of 10.0 or lower.

EP 4 620 987 A1

## Description

[Technical Field]

This application claims the benefits of Korean Patent Application No. 10-2023-0121554 filed in the Korean Intellectual Property Office on September 13, 2023, Korean Patent Application No. 10-2023-0127259 filed in the Korean Intellectual Property Office on September 22, 2023, Korean Patent Application No. 10-2023-0127192 filed in the Korean Intellectual Property Office on September 22, 2023 and Korean Patent Application No. 10-2024-0124634 filed in the Korean Intellectual Property Office on September 12, 2024, the entire contents of which are incorporated herein by reference.

The present specification relates to a resin composition and an article containing the same.

[Background Art]

A high-refractive material refers to a material having a high refractive index, which means a dense medium in terms of photon transmission. Glass has been used as the high-refractive material in general, but it has the disadvantages of low safety and high specific gravity. Therefore, the development of a transparent soft polymer-based high-refractive materials is required.

A high-refractive resin, as an example of the high-refractive material, can be used in optical members that require anti-reflection, light scattering or light extraction effects. For example, it can be used in optical plastic lenses, high-precision lenses for optical disc recording such as CDs or DVDs, prisms, optical fibers, light guide plates, optical adhesives or glues, encapsulants for optical semiconductors, or functional materials used for PDPs (plasma display panels) or LCDs (liquid crystal displays) such as anti-reflection films, light scattering films, viewing angle enhancement films, brightness enhancement films, optical filters, etc. Additionally, the high-refractive resin may also be used in additives for preventing degradation of plastics, cosmetic additives, glasses for vehicle windows, etc.

Therefore, it is necessary to develop materials that can satisfy the balance of mechanical properties, light resistance, etc. by improving refractive index, heat resistance and chemical resistance.

### [Disclosure]

[Technical Problem]

The present specification is directed to providing a resin composition and an article containing the same.

[Technical Solution]

An embodiment of the present specification provides a resin composition containing: a resin containing a unit represented by Chemical Formula 1; a resin containing a unit represented by Chemical Formula 2; and at least two types of UV stabilizers, wherein the resin composition exhibits color difference change rate ($Eab_1$) on the first day (n = 1) of ultraviolet irradiation, defined by Equation 1, of 10.0 or lower.

[Equation 1]

$$Eab_n = \{(L_n - L_{n-1})^2 + (a_n - a_{n-1})^2 + (b_n - b_{n-1})^2\}^{1/2}$$

In Equation 1,

$L_{n-1}$ is the brightness index of the resin composition on the (n-1)th day of ultraviolet irradiation,
$a_{n-1}$ and $b_{n-1}$ are the color coordinates of the resin composition on the (n-1)th day of UV irradiation,
$L_n$ is the brightness index of the resin composition on the nth day of UV irradiation,
$a_n$ and $b_n$ are the color coordinates of the resin composition on the nth day of UV irradiation,

[Chemical Formula 1]

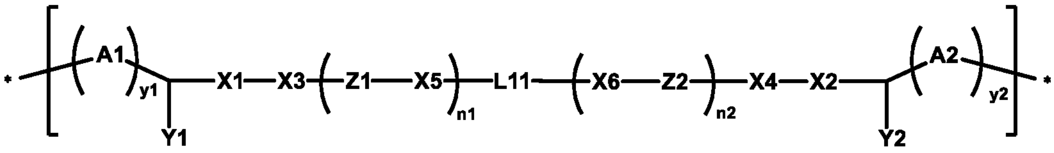

[Chemical Formula 2]

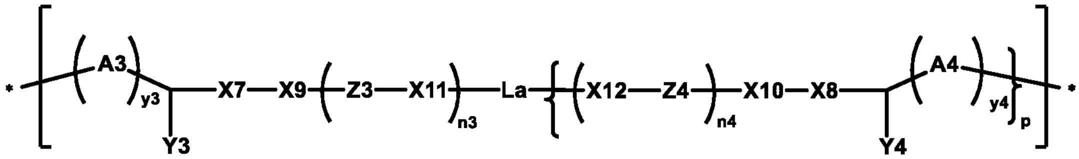

Wherein in Chemical Formulae 1 and 2,

L11 is any one of Chemical Formulae A-1, B-1 and C-1,
each of Y1, Y2, Y3 and Y4, which are identical or different, is independently hydrogen, a substituted or unsubstituted alkyl group or a substituted or unsubstituted aryl group,
each of X1, X2, X7 and X8, which are identical or different, is independently C=O or a substituted or unsubstituted alkylene group,
each of X3, X4, X5 and X6, which are identical or different, is independently O or S,
each of Z1 and Z2, which are identical or different, is a substituted or unsubstituted alkylene group, a substituted or unsubstituted heteroalkylene group or a substituted or unsubstituted cycloalkylene group,
p is an integer from 0 to 8, and the structures in parentheses are identical or different if p is 2 or greater,
La is a substituted or unsubstituted bivalent or higher alkyl group, a substituted or unsubstituted bivalent or higher cycloalkyl group, a substituted or unsubstituted bivalent or higher heteroalkyl group, a substituted or unsubstituted bivalent or higher aryl group, or a substituted or unsubstituted bivalent or higher heteroaryl group, wherein La is a substituted or unsubstituted alkylene group or a substituted or unsubstituted arylene group if p is 0,
each of X9, X10, X11 and X12, which are identical or different, is independently a bivalent amide group, a bivalent urethane group, a bivalent urea group, a bivalent ester group, O or S,
Z3 and Z4 are either the same or different, and each independently is a substituted or unsubstituted alkylene group, a substituted or unsubstituted heteroalkylene group, a substituted or unsubstituted arylene group, or a substituted or unsubstituted heteroarylene group,
n1, n2, n3, and n4 are integers from 0 to 20, and the structures within each bracket are either identical or different if each of n1, n2, n3 and n4 is 2 or greater,
each of y1, y2, y3, and y4 is an integer from 1 to 20, and the structures in each bracket are the same or different from each other if y1, y2, y3, and y4 are 2 or greater,
each of A1 to A4, which are identical or different, is independently CRR',
each of R and R', which are identical or different, is independently hydrogen; a substituted or unsubstituted alkyl group; a substituted or unsubstituted heteroalkyl group; a substituted or unsubstituted aryl group; or a substituted or unsubstituted heteroaryl group,
* is a moiety connected to the main chain of the resin,

[Chemical Formula A-1]

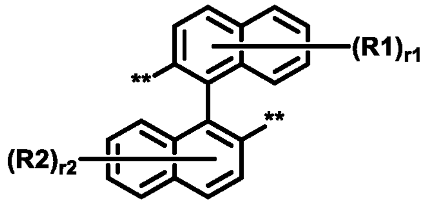

[Chemical Formula B-1]

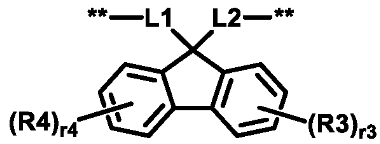

[Chemical Formula C-1]

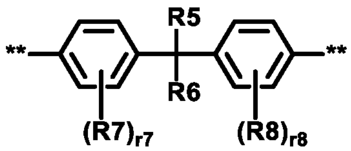

Wherein in Chemical Formulae A-1, B-1 and C-1,

each of L1 and L2, which are identical or different, is independently a substituted or unsubstituted arylene group or a substituted or unsubstituted heteroarylene group,

each of R1 to R8, which are identical or different, is independently hydrogen, a substituted or unsubstituted alkyl group, a substituted or unsubstituted heteroalkyl group, a substituted or unsubstituted aryl group, a substituted or unsubstituted condensed ring group of an aromatic hydrocarbon ring and an aliphatic hydrocarbon ring, or a substituted or unsubstituted heteroaryl group, wherein adjacent groups may be connected to form a hydrocarbon ring,

each of r1 and r2 is an integer from 0 to 6, wherein the structures within the parentheses are identical or different if each of r1 and r2 is 2 or greater,

each of r3, r4, r7 and r8 is an integer from 0 to 4, wherein the structures within the parentheses are identical or different if each of r3, r4, r7 and r8 is 2 or greater, and

** is a moiety bonded to Chemical Formula 1.

In addition, another embodiment of the present specification provides an article containing the resin composition or a cured product thereof.

[Advantageous Effects]

The resin composition according to an embodiment of the present specification exhibits a low color difference change rate, a high refractive index, superior adhesivity, high transmittance, a high glass transition temperature, etc.

Also, the resin composition according to an embodiment of the present specification can be used for coating materials, curable materials, lens materials, optical substrate materials, etc.

[Best Mode]

Hereinafter, the present specification will be described in more detail.

In the present specification, when a member is said to be located "on" another member, it includes not only the case where the member is in contact with the another member but also the case where another member exists between the two members.

In the present specification, when a part is said to "include" a certain component, it means that it can further include other components, unless the context clearly specifies otherwise.

In the present specification, the term "substitution" means that a hydrogen atom bonded to a carbon atom of a compound is replaced by another substituent, and the position of substitution is not limited to the position where the hydrogen atom is substituted and, if there are two or more substitutions, the two or more substituents may be identical or different.

In the present specification, the term "substituted or unsubstituted" means substitution with one or more substituent selected from a group consisting of deuterium, a halogen group; a nitro group ($NO_2$), a nitrile group (CN), an alkyl group, a heteroalkyl group, a cycloalkyl group, an aryl group, an aryloxy group, an arylthio group, an alkylthio group and a heteroaryl group, substitution with substituents in which two or more of the above-mentioned substituents are linked, or no substitution at all.

In the present specification, * means a moiety bonded to another structure.

In the present specification, the cycloalkylene group may be a monocyclic or polycyclic cycloalkylene group. Specifically, the cycloalkylene group may be a $C_{3-20}$ cycloalkylene group, a $C_{6-18}$ monocyclic or polycyclic cycloalkylene group or a $C_{6-12}$ monocyclic or polycyclic cycloalkylene group. More specifically, the cycloalkylene group may be a monocyclic cycloalkylene bivalent group derived from an alicyclic hydrocarbon such as a cyclopentylene group, a

cyclohexylene group, a cycloheptylene group, etc., or may be a polycyclic cycloalkylene group such as an adamantane-diyl group, a norbornane-diyl group, etc. However, the present specification is not limited thereto. Also, the cycloalkylene group may be substituted or unsubstituted with one or more $C_{1-10}$ alkyl group, $C_{1-10}$ alkoxy group or halogen group.

In the present specification, the description of the cycloalkylene group can be applied to the cycloalkyl group, except that it is monovalent rather than bivalent.

In the present specification, the description of the cycloalkylene group can be applied to the bivalent cycloalkyl group.

In the present specification, the alkylene group may be a bivalent linear or branched alkylene group derived from a $C_{1-30}$, $C_{1-20}$, $C_{1-10}$ or $C_{1-5}$ aliphatic hydrocarbon. Specific examples of the alkylene group include a methylene group, an ethylene group, a propylene group, a n-propylene group, an isopropylene group, a butylene group, a n-butylene group, an isobutylene group, a tert-butylene group, a sec-butylene group, a 1-methyl-butylene group, a 1-ethyl-butylene group, a pentylene group, a n-pentylene group, an isopentylene group, a neopentylene group, a tert-pentylene group, a hexylene group, a n-hexylene group, a 1-methylpentylene group, a 2-methylpentylene group, a 4-methyl-2-pentylene group, a 3,3-dimethylbutylene group, a 2-ethylbutylene group, a heptylene group, a n-heptylene group, a 1-methylhexylene group, an octylene group, a n-octylene group, a tert-octylene group, a 1-methylheptylene group, a 2-ethylhexylene group, a 2-propylpentylene group, a n-nonylene group, a 2,2-dimethylheptylene group, a 1-ethyl-propylene group, a 1,1-dimethylpropylene group, an isohexylene group, a 2-methylpentylene group, a 4-methylhexylene group, a 5-methylhexylene group, etc., although not being limited thereto.

In the present specification, the description of the alkylene group can be applied to the alkyl group except that it is monovalent rather than bivalent.

In the present specification, the description of the alkylene group can be applied to the bivalent alkyl group.

In the present specification, the heteroalkylene group refers to a stable linear, branched or cyclic hydrocarbon radical consisting of carbon atoms of the alkylene group described above and one or more heteroatom selected from a group consisting of O, N, Si and S, or a combination thereof. Here, the nitrogen and sulfur atoms may be optionally oxidized, and the nitrogen heteroatom may be optionally quaternized. The heteroatom(s) O, N, and S and Si may be placed at any internal position of the heteroalkyl group or at a position where the alkyl group is attached to the rest of the molecule. Examples include $-CH_2-CH_2-O-CH_3$, $-CH_2-CH_2-NH-CH_3$, $-CH_2-CH_2-N(CH_3)-CH_3$, $-CH_2-S-CH_2-CH_3$, $-CH_2-CH_2-S(O)-CH_3$, $-CH_2-CH_2-S(O)_2-CH_3$, $-CH=CH-O-CH_3$, $-Si(CH_3)_3$, $-CH_2-CH=N-OCH_3$ and $-CH=CH-N(CH_3)-CH_3$, although not being limited thereto. For example, two or fewer heteroatoms can be consecutive, such as $-CH_2-NH-OCH_3$ and $-CH_2-OSi(CH_3)_3$.

In the present specification, the description of the heteroalkylene group can be applied to the heteroalkyl group, except that the heteroalkyl group is monovalent rather than bivalent.

In the present specification, the description of the heteroalkylene group can be applied to the bivalent heteroalkyl group.

In the present specification, the description of the linear or branched alkylene group can be applied except that the linear or branched alkyl group is monovalent rather than bivalent.

In the present specification, the alkyl group includes a linear alkyl group and a branched alkyl group unless limited otherwise.

In the present specification, the arylene group may be a monocyclic or polycyclic arylene group, and the number of carbon atoms may be specifically 6 to 30 or 6 to 20, although not being specially limited thereto. Specifically, the monocyclic arylene group may be a phenylene group, a biphenylylene group, a terphenylylene group, etc., although not being limited thereto. Specifically, the number of carbon atoms in the arylene group may be 10 to 30 or 10 to 20, although not being specially limited thereto. Specifically, the polycyclic arylene group may include a naphthylene group, an anthracenylene group, a phenanthrenylene group, a triphenylene group, a pyrenylene group, a phenalenylene group, a perylenylene group, a chrysenylene group, a fluorenylene group, etc., although not being limited thereto.

In the present specification, the description of the arylene group can be applied, except that the aryl group is not bivalent but monovalent.

In the present specification, the heteroaryl group contains one or more heteroatoms, which are atoms other than carbon. Specifically, the heteroatom includes one or more atom selected from a group consisting of O, N, Se, S, etc. The number of carbon atoms in the heteroaryl group is not particularly limited. Specifically, the number of carbon atoms may be 1 to 30 or 1 to 20. The heteroaryl group may be monocyclic or polycyclic. Examples of heteroaryl groups include thiophenyl, furanyl, dibenzofuranyl, dibenzothiophenyl, benzothiophenyl, pyrrolyl, imidazolyl, thiazolyl, oxazolyl, oxadiazolyl, pyridyl, bipyridyl, pyrimidinyl, triazinyl, triazolyl, acridinyl, pyridazinyl, pyrazinyl, quinolinyl, quinazolinyl, quinoxalinyl, phthalazinyl, pyrido pyrimidinyl, pyrido pyrazinyl, pyrazino pyrazinyl, isoquinolinyl, indolyl, carbazolyl, etc., but are not limited to these.

In the present specification, the description of heteroaryl can be applied to heteroarylene except that it is bivalent rather than monovalent.

In the present specification, the description of heteroaryl can be applied except that the bivalent heteroaryl group is not monovalent but bivalent.

In the present specification, the bivalent aliphatic hydrocarbon group refers to the alkylene, cycloalkylene, etc. described above.

In the present specification, the alkoxy group may be a $C_{1-10}$ or $C_{1-5}$ alkoxy group. Specific examples of the alkoxy group include a methoxy group, an ethoxy group, a n-propoxy group, an isopropoxy group, a n-butoxy group, an isobutoxy group, a tert-butoxy group, a sec-butoxy group, a 1-methylbutoxy group, a 1-ethylbutoxy group, a pentyloxy group, etc., although not being limited thereto.

In the present specification, the halogen group is a fluoro group, a chloro group, a bromo group, or an iodo group.

In the present specification, the condensed ring of the aromatic hydrocarbon ring and the aliphatic hydrocarbon ring may be a condensed ring of the aryl group and the cycloalkyl group described above, or may be a condensed ring of the aryl group and the cycloalkenyl group described above. The cycloalkenyl group refers to a cycloalkyl group containing an unsaturated hydrocarbon group, a cycloalkyl group containing a double bond.

In the present specification, the description of the cycloalkylene or heterocycloalkylene can be applied to the aliphatic ring, and the description of the arylene or heteroarylene can be applied to the aromatic ring.

In the present specification, the aryloxy group may be expressed as -ORo, and the description of the aryl applies to Ro.

In the present specification, the arylthio group may be expressed as -SRs1, and the description for the aryl applies to Rs1.

In the present specification, the alkylthio group may be expressed as -SRs2, and the description of the alkyl applies to Rs2.

In the present specification, the oxygen of the ester group may be substituted with a $C_{1-30}$ linear, $C_{3-30}$ branched or $C_{3-30}$ cyclic alkyl group, or a $C_{6-30}$ aryl group. Specifically, the ester group may be any one of the following structural formulae, although not being limited thereto.

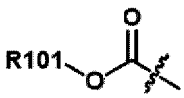

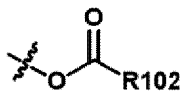

In the structural formulae, each of R101 and R102, which are identical or different, is independently a $C_{1-10}$ linear or branched alkyl group substituted or unsubstituted with a $C_{6-30}$ monocyclic or polycyclic aryl group, or a $C_{6-30}$ monocyclic or polycyclic aryl group.

In the present specification, the bivalent ester group refers to one wherein R101 or R102 is a bivalent group, and there are two connecting sites of the ester group.

In the present specification, the hydrogen is hydrogen, deuterium or tritium.

According to an embodiment of the present specification, in the above chemical formula 1, the part to which a substituent is not bonded means that hydrogen is bonded..

The resin composition according to an embodiment of the present specification is a resin composition containing: a resin containing a unit represented by Chemical Formula 1; a resin containing a unit represented by Chemical Formula 2; and at least two types of UV stabilizers, wherein the resin composition exhibits a color difference change rate ($Eab_1$) on the first day (n = 1) of ultraviolet irradiation, defined by Equation 1, of 10.0 or lower.

Since the resin composition according to an embodiment of the present specification satisfies a color difference change rate ($Eab_1$) on the first day (n = 1) of ultraviolet irradiation, defined by Equation 1, of 10.0 or lower, it can exhibit superior light resistance and stable optical properties due to minimized discoloration or deterioration of the resin composition because the resin containing the unit represented by Chemical Formula 1 and the resin containing the unit represented by Chemical Formula 2 suppress the deformation of the internal molecular structure even during long-term ultraviolet irradiation.

Accordingly, the resin composition allows preparation of a resin film that can maintain high strength properties while being colorless and transparent even when exposed to an environment where strong ultraviolet rays are irradiated for a long time. It is superior in terms of economy and efficiency since it can expand the application field of the resin film due to low cost and simple process.

More specifically, the resin composition may have a color difference change rate ($Eab_1$) on the first day (n = 1) of UV irradiation, defined by Equation 1, of 10.0 or lower, 0.01 to 10.0, 0.01 to 9.0, 0.01 to 8.0, 0.01 to 7.0, 0.05 to 5.0, or 5.68 to 9.14.

The color difference change rate ($Eab_1$) of the first day (n = 1) of UV irradiation, defined by Equation 1, of the resin composition can be calculated from Equation 1-1.

[Equation 1-1]

$$Eab_1 = \{(L_1 - L_0)^2 + (a_1 - a_0)^2 + (b_1 - b_0)^2\}^{1/2}$$

In Equation 1-1,

$L_0$ is the brightness index of the resin composition on the 0th day of UV irradiation,
$a_0$ and $b_0$ are the color coordinates of the resin composition on the 0th day of UV irradiation,
$L_1$ is the brightness index of the resin composition on the first day of UV irradiation, and
$a_1$ and $b_1$ are the color coordinates of the resin composition on the first day of UV irradiation.

The resin composition on the 0th day of UV irradiation refers to a resin composition that has not been subjected to ultraviolet irradiation, and the resin composition on the first day of UV irradiation refers to a resin composition has been subjected to ultraviolet irradiation for one day.

If the color difference change rate ($Eab_1$) of the resin composition on the first day of UV irradiation (n = 1), defined by Equation 1, decreases to 10.0 or lower, the degree of discoloration and deterioration of the resin composition is not significant even when exposed to UV rays and thus it can be applied to products. However, if the color difference change rate ($Eab_1$) of the resin composition on the first day of UV irradiation (n = 1), defined by Equation 1, exceeds 10.0, it is not desirable because the resin composition may undergo discoloration and deterioration to a serious level that makes it difficult to be applied to products when exposed to UV.

The brightness index (L) and color coordinates (a, b) refer to the values on the coordinate axes that represent unique colors, respectively. L has a value from 0 to 100. A value close to 0 indicates black color, and a value close to 100 indicates white color. a may have both positive (+) and negative (-) values relative to 0. A positive (+) value indicates red color, and a negative (-) value indicates green color. b may have both positive (+) and negative (-) values relative to 0. A positive (+) value indicates yellow color, and a negative (-) value indicates blue color.

The brightness index (L) and color coordinates (a, b) of the resin composition can be measured using methods known in the art. For example, after preparing a specimen of 5 cm x 5 cm in size with the resin composition, measurement may be made while irradiating ultraviolet ray with a wavelength of 200 nm to 1,200 nm to the specimen using a Shimadzu UV-2600 UV-vis spectrometer at 20 °C to 70 °C.

More specifically, the brightness index $L_1$ of the resin composition on the first day of UV irradiation may be 97.00 or lower, 94.00 to 97.00, 94.50 to 96.90, 95.00 to 96.90, or 95.59 to 96.65. Additionally, the color coordinate $a_1$ of the resin composition on the first day of UV irradiation may be -3.0 or higher, -2.8 to -0.1, -2.8 to -0.2, -2.5 to -0.3, or -1.96 to - 1.33. Additionally, the color coordinate $b_1$ of the resin composition on the first day of UV irradiation may be 10 or lower, 1 to 10, 1 to 8, or 4.57 to 8.24.

According to an embodiment of the present specification, Chemical Formula 1 is any one of Chemical Formulae 1-1 to 1-3.

[Chemical Formula 1-1]

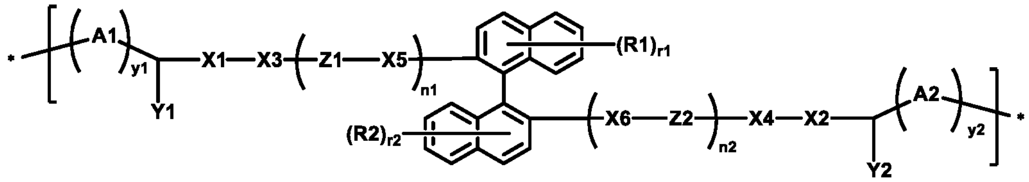

[Chemical Formula 1-2]

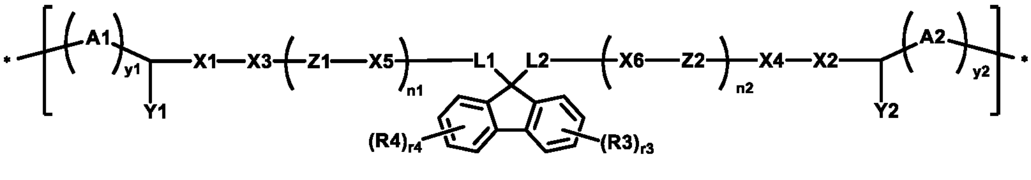

[Chemical Formula 1-3]

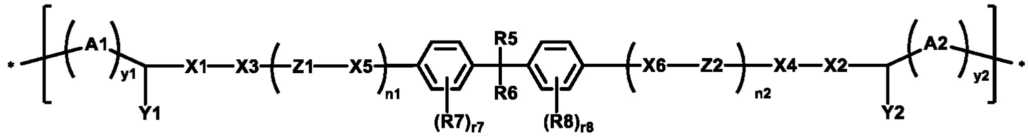

In Chemical Formulae 1-1 to 1-3,

The definitions of Z1, Z2, X1 to X6, n1, n2, Y1, Y2, y1, y2, A1, A2 and * are the same as in Chemical Formula 1,
the definitions of R1, r1, R2 and r2 are the same as in Chemical Formula A-1,
the definitions of L1, L2, R3, r3 R4 and r4 are the same as in Chemical Formula B-1, and
the definitions of R5 to R8, r7 and r8 are the same as in Chemical Formula C-1.

According to an embodiment of the present specification, each of Z1 and Z2, which are identical or different, is independently a $C_{1-30}$ linear or branched alkylene group.
According to an embodiment of the present specification, each of Z1 and Z2, which are identical or different, is independently a $C_{1-20}$ linear or branched alkylene group.
According to an embodiment of the present specification, each of Z1 and Z2, which are identical or different, is independently a $C_{1-10}$ linear or branched alkylene group.
According to an embodiment of the present specification, Z1 and Z2 are ethylene groups.
According to an embodiment of the present specification, X1 is C=O.
According to an embodiment of the present specification, X2 is C=O.
According to an embodiment of the present specification, X1 is a $C_{1-30}$ linear or branched alkylene group.
According to an embodiment of the present specification, X1 is a $C_{1-10}$ linear or branched alkylene group.
According to an embodiment of the present specification, X1 is a $C_{1-4}$ linear or branched alkylene group.
According to an embodiment of the present specification, X1 is a methylene group or an ethylene group.
According to an embodiment of the present specification, X2 is a $C_{1-30}$ linear or branched alkylene group.
According to an embodiment of the present specification, X2 is a $C_{1-10}$ linear or branched alkylene group.
According to an embodiment of the present specification, X2 is a $C_{1-4}$ linear or branched alkylene group.
According to an embodiment of the present specification, X2 is a methylene group or an ethylene group.
According to an embodiment of the present specification, X3 is O.
According to an embodiment of the present specification, X4 is O.
According to an embodiment of the present specification, X5 is O.
According to an embodiment of the present specification, X6 is O.
According to an embodiment of the present specification, X3 is S.
According to an embodiment of the present specification, X4 is S.
According to an embodiment of the present specification, X5 is S.
According to an embodiment of the present specification, X6 is S.
According to an embodiment of the present specification, each of Y1 and Y2, which are identical or different, is independently hydrogen or a $C_{1-30}$ linear or branched alkyl group.
According to an embodiment of the present specification, each of Y1 and Y2, which are identical or different, is independently hydrogen or a $C_{1-10}$ linear or branched alkyl group.
According to an embodiment of the present specification, each of Y1 and Y2, which are identical or different, is independently hydrogen or a $C_{1-4}$ linear or branched alkyl group.
According to an embodiment of the present specification, each of Y1 and Y2, which are identical or different, is independently hydrogen or a $C_{1-4}$ linear alkyl group.
According to an embodiment of the present specification, each of Y1 and Y2, which are identical or different, is independently hydrogen or a methyl group.
According to an embodiment of the present specification, each of A1 and A2, which are identical or different, is independently CRR'.
According to an embodiment of the present specification, each of R and R', which are identical or different, is independently hydrogen or a $C_{1-30}$ linear or branched alkyl group.
According to an embodiment of the present specification, each of R and R', which are identical or different, is independently hydrogen or a $C_{1-10}$ linear or branched alkyl group.
According to an embodiment of the present specification, each of R and R', which are identical or different, is independently hydrogen or a $C_{1-4}$ linear or branched alkyl group.
According to an embodiment of the present specification, each of R and R', which are identical or different, is

independently hydrogen or a $C_{1-4}$ linear alkyl group.

According to an embodiment of the present specification, each of R and R', which are identical or different, is independently hydrogen or a methyl group.

According to an embodiment of the present specification, R1 and R2 are hydrogen.

In an embodiment of the present specification, each of L1 and L2, which are identical or different, is independently a substituted or unsubstituted $C_{6-30}$ monocyclic or polycyclic arylene group.

In an embodiment of the present specification, each of L1 and L2, which are identical or different, is independently a substituted or unsubstituted $C_{6-20}$ monocyclic or polycyclic arylene group.

In an embodiment of the present specification, each of L1 and L2, which are identical or different, is independently a $C_{6-30}$ monocyclic or polycyclic arylene group substituted or unsubstituted with a $C_{6-30}$ monocyclic or polycyclic aryl group.

In an embodiment of the present specification, each of L1 and L2, which are identical or different, is independently a $C_{6-20}$ monocyclic or polycyclic arylene group substituted or unsubstituted with a $C_{6-20}$ monocyclic or polycyclic aryl group.

In an embodiment of the present specification, each of L1 and L2, which are identical or different, is independently a phenylene group substituted or unsubstituted with a phenyl group, or a naphthylene group.

In an embodiment of the present specification, L1 and L2 are the same as each other and are a phenylene group substituted or unsubstituted with a phenyl group, or a naphthylene group.

In an embodiment of the present specification, L1 and L2 are phenylene groups.

In an embodiment of the present specification, L1 and L2 are phenylene groups substituted with phenyl groups.

In an embodiment of the present specification, L1 and L2 are naphthylene groups.

In an embodiment of the present specification, R3 and R4 are hydrogen.

In an embodiment of the present specification, R7 and R8, which are identical or different, may independently be selected from hydrogen, a substituted or unsubstituted alkyl group, a substituted or unsubstituted aryl group, a substituted or unsubstituted heteroalkyl group, and the following functional groups.

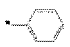 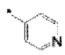 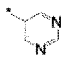 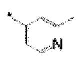 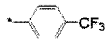 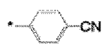 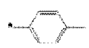

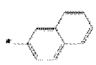 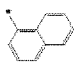 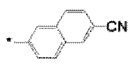 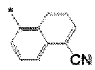 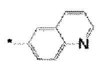 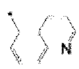 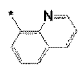

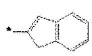 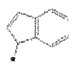 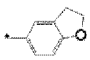 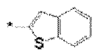 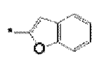 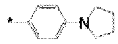

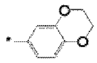 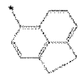 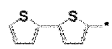 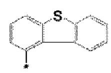 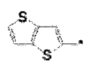

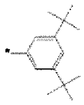 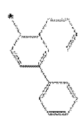 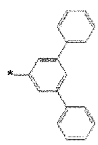 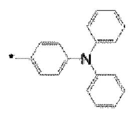 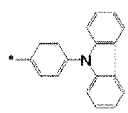

In the above functional groups, * denotes a moiety connected to Chemical Formula C-1.

According to an embodiment of the present specification, each of R7 to R8, which are identical or different, is independently hydrogen, a $C_{1-30}$ linear or branched alkyl group; a $C_{6-30}$ monocyclic or polycyclic aryl group substituted or unsubstituted with a cyano group, a $C_{1-30}$ linear or branched alkyl group, a $C_{2-30}$ linear or branched alkenyl group, or a $C_{2-30}$ monocyclic or polycyclic heterocyclic group; a condensed ring group of a $C_{6-30}$ monocyclic or polycyclic aromatic hydrocarbon ring and a $C_{3-30}$ monocyclic or polycyclic aliphatic hydrocarbon ring; or a $C_{6-30}$ polycyclic heteroaryl group.

According to an embodiment of the present specification, each of R7 to R8, which are identical or different, is independently hydrogen; a $C_{1-30}$ linear or branched alkyl group; a $C_{6-20}$ monocyclic or polycyclic aryl group substituted or unsubstituted with a cyano group, a $C_{1-20}$ linear or branched alkyl group, a $C_{2-20}$ linear or branched alkenyl group, or a $C_{2-20}$ monocyclic or polycyclic heterocyclic group; a condensed ring group of a $C_{6-20}$ monocyclic or polycyclic aromatic hydrocarbon ring and a $C_{3-20}$ monocyclic or polycyclic aliphatic hydrocarbon ring; or a $C_{6-20}$ polycyclic heteroaryl group.

According to an embodiment of the present specification, each of R7 to R8, which are identical or different, is

independently hydrogen; a methyl group; a phenyl group substituted or unsubstituted with a cyano group or a methyl group; a naphthyl group substituted or unsubstituted with a cyano group; a dihydroindenyl group; or a quinolyl group.

According to an embodiment of the present specification, each of R5 and R6, which are identical or different, is independently a $C_{1-30}$ linear or branched alkyl group substituted or unsubstituted with a halogen; a $C_{6-30}$ monocyclic or polycyclic cycloalkyl group; a $C_{6-30}$ monocyclic or polycyclic aryl group; or a $C_{2-30}$ monocyclic or polycyclic heteroaryl group, or they combine to form a $C_{6-30}$ monocyclic or polycyclic aliphatic hydrocarbon ring substituted or unsubstituted with a $C_{1-30}$ linear or branched alkyl group.

According to an embodiment of the present specification, each of R5 and R6, which are identical or different, is independently a $C_{1-20}$ linear or branched alkyl group substituted or unsubstituted with a halogen; a $C_{6-20}$ monocyclic or polycyclic cycloalkyl group, a $C_{6-20}$ monocyclic or polycyclic aryl group; or a $C_{2-20}$ monocyclic or polycyclic heteroaryl group, or they combine to form a $C_{6-20}$ monocyclic or polycyclic aliphatic hydrocarbon ring substituted or unsubstituted with a $C_{1-20}$ linear or branched alkyl group.

According to an embodiment of the present specification, each of R5 and R6, which are identical or different, is independently a methyl group substituted or unsubstituted with a fluoro group; a n-propyl group; an isobutyl group; or a phenyl group, or they combine to form cyclohexane substituted or unsubstituted a methyl group; or cyclododecane.

According to an embodiment of the present specification, the unit represented by Chemical Formula 1 includes a unit derived from one or more of the following compounds.

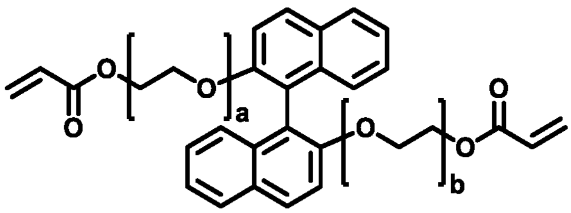

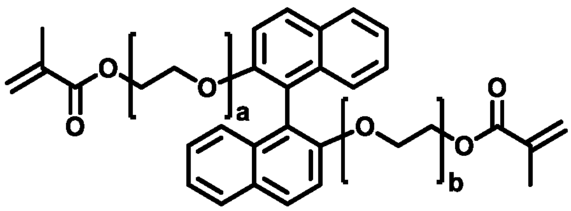

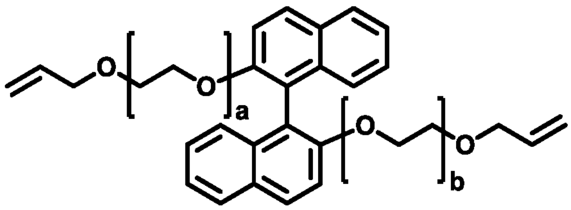

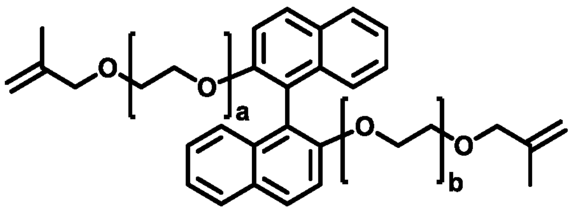

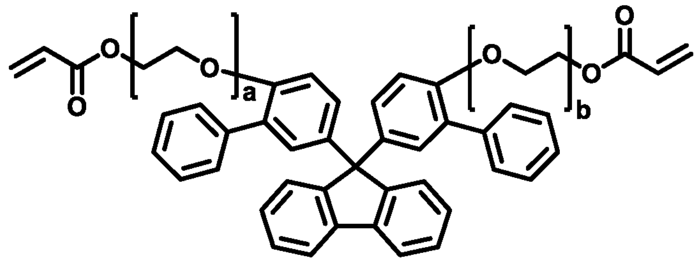

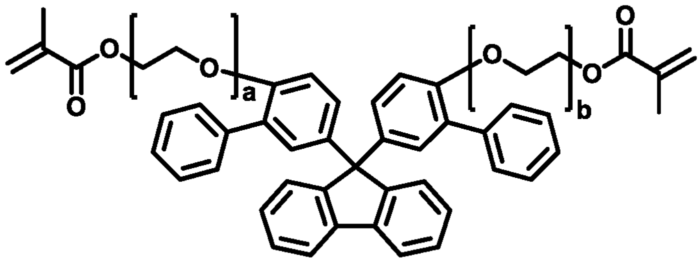

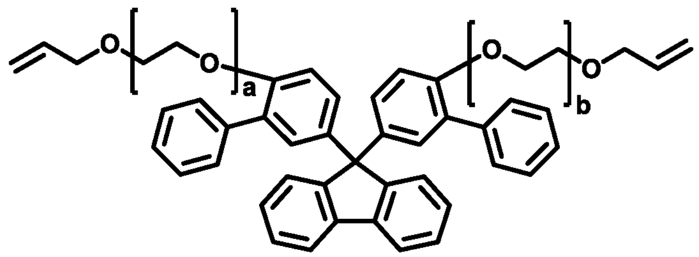

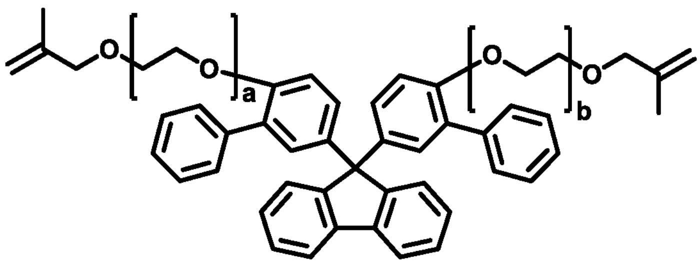

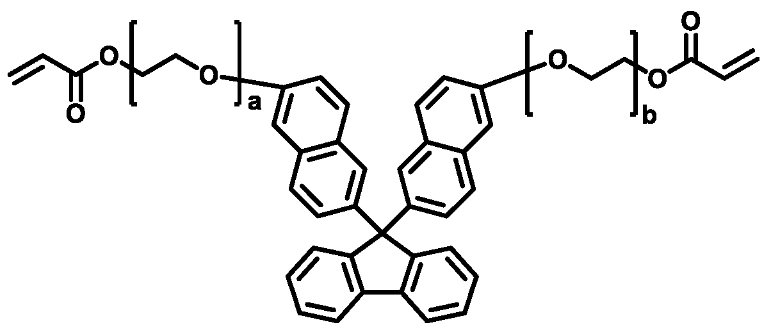

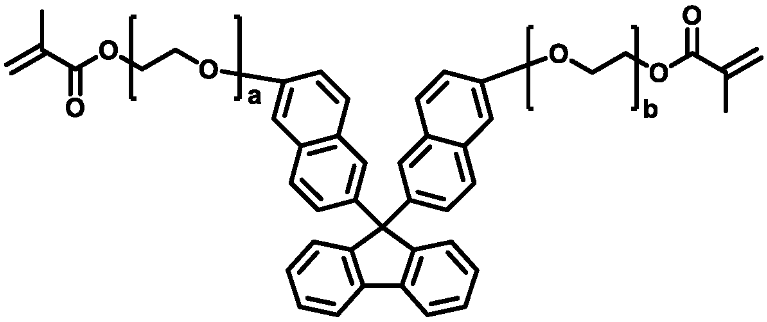

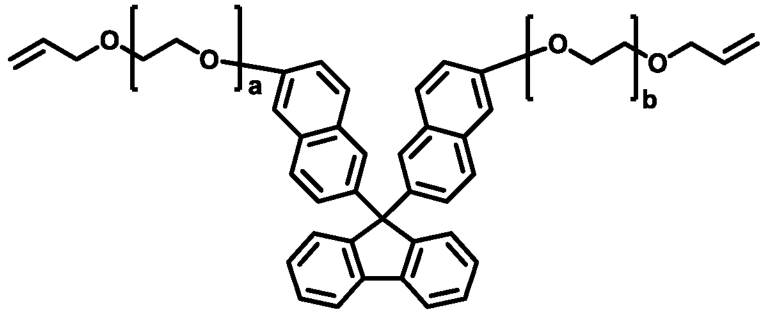

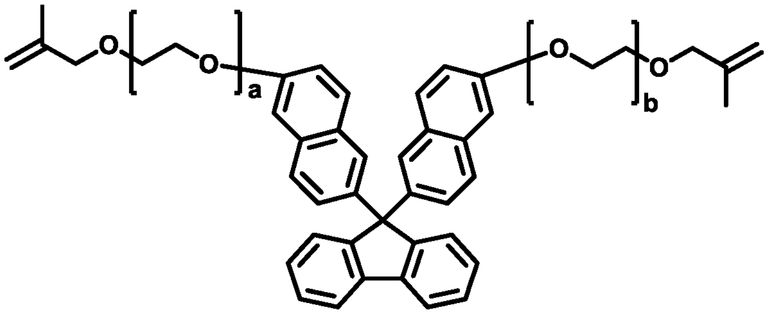

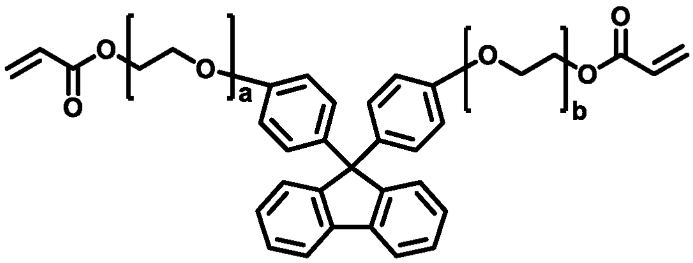

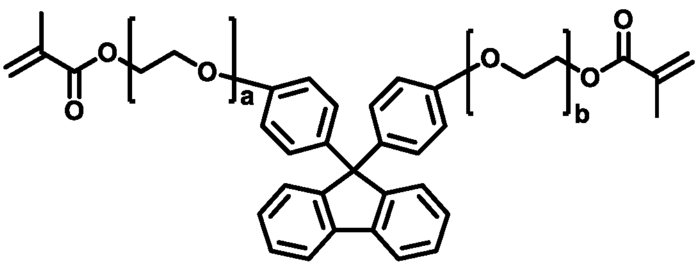

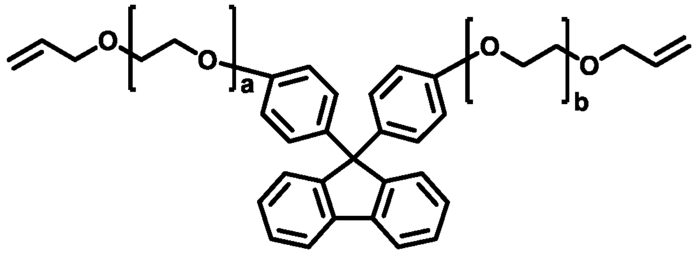

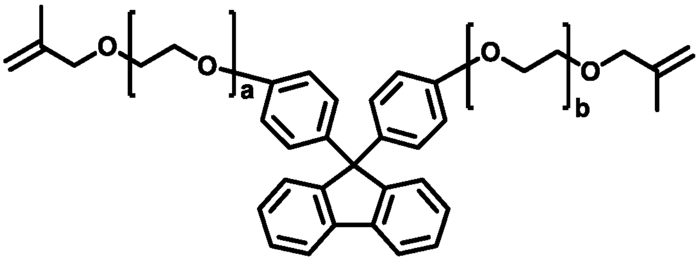

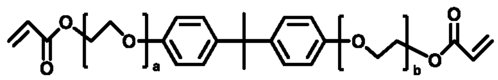

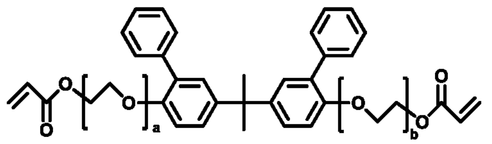

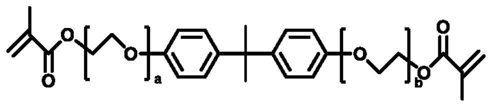

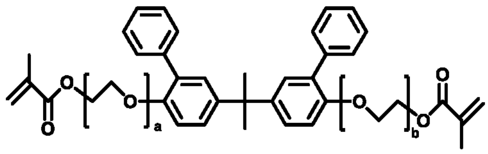

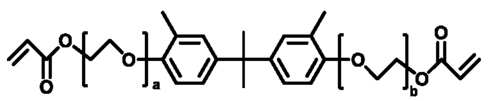

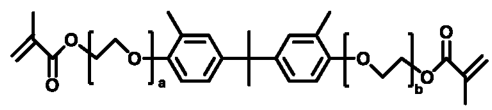

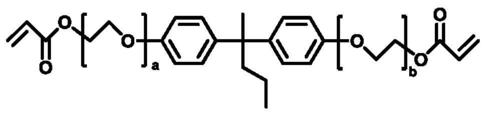

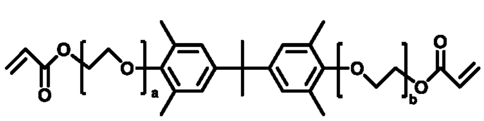

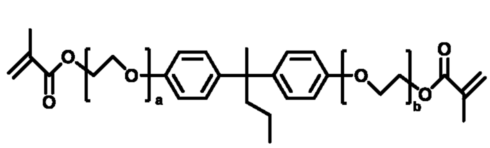

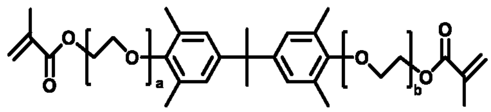

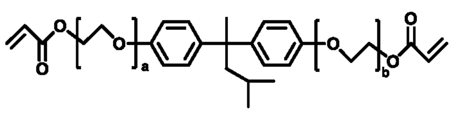

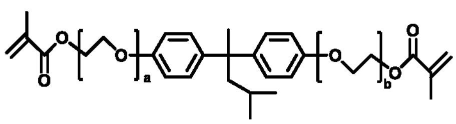

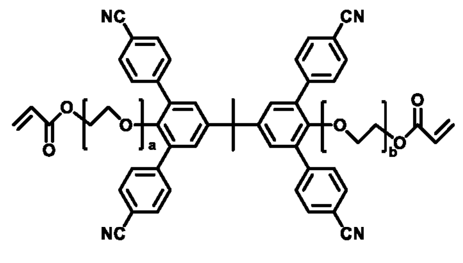

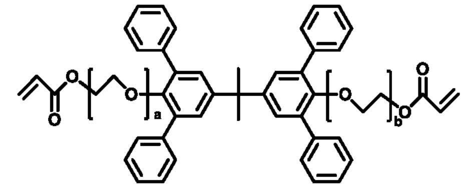

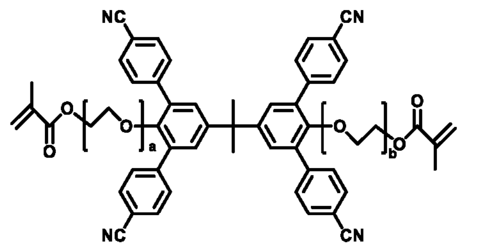

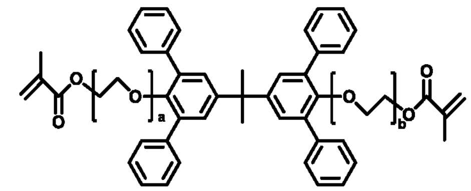

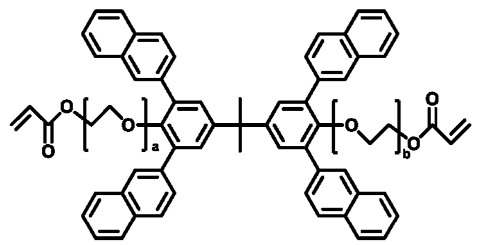

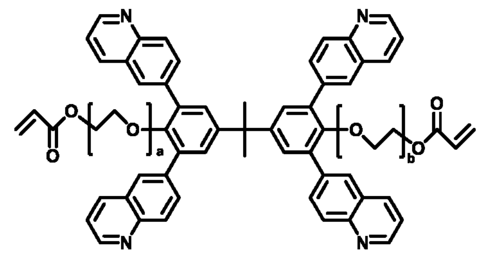

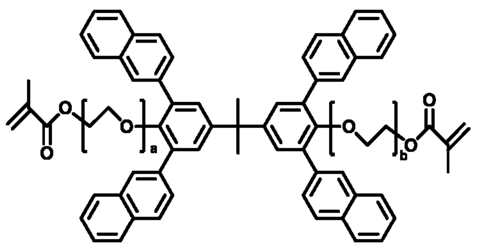

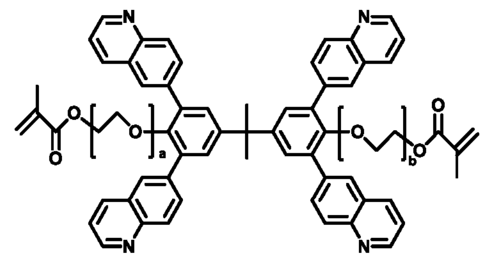

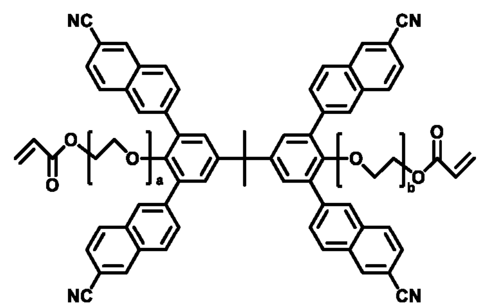

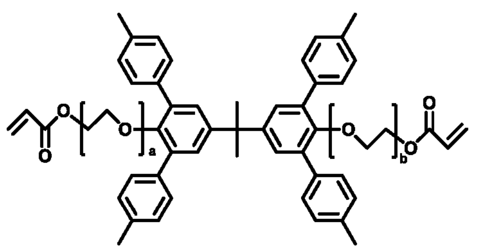

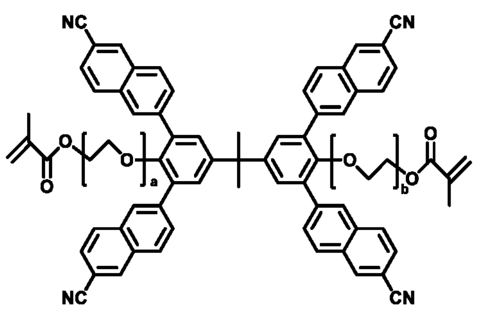

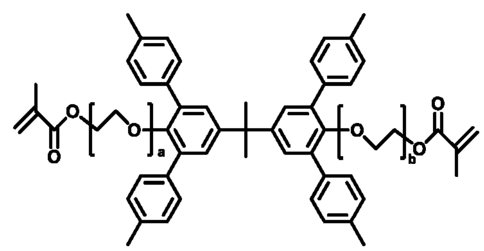

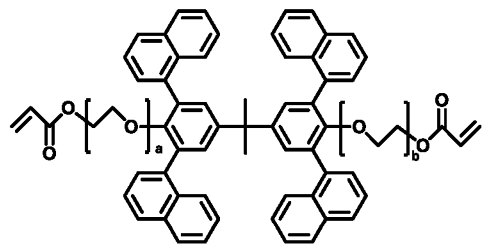
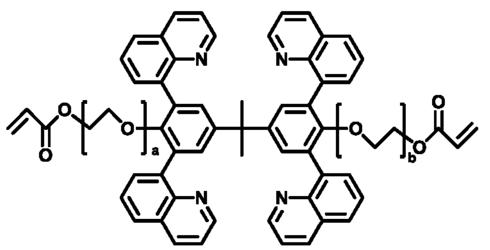

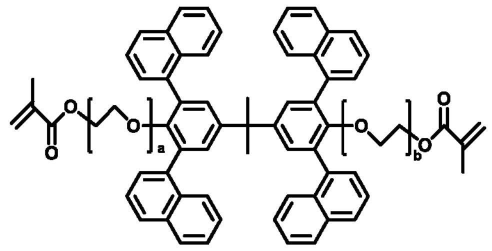
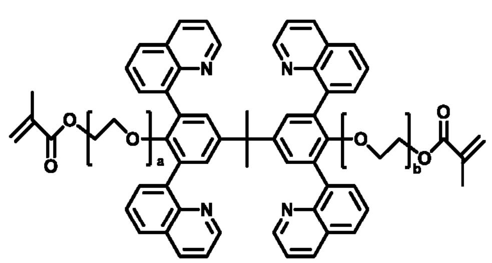

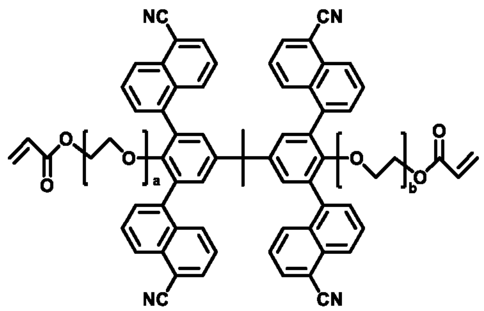
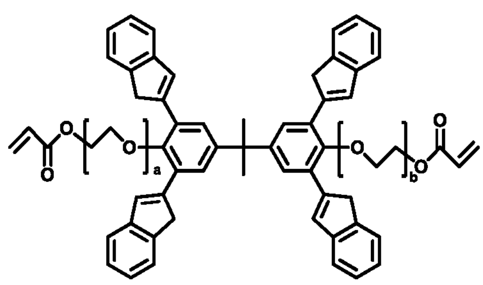

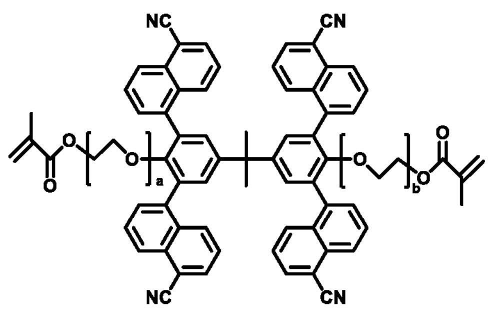
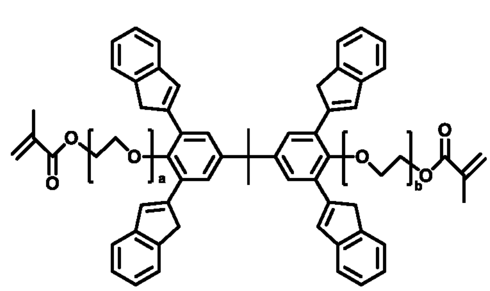

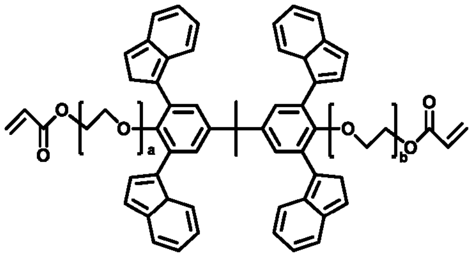
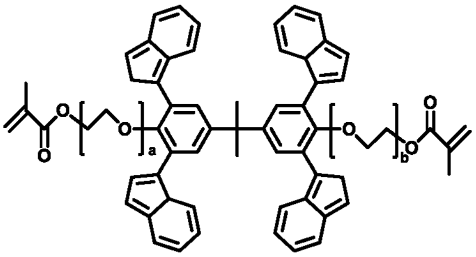
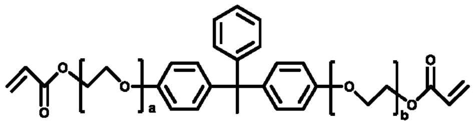
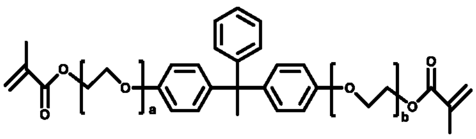
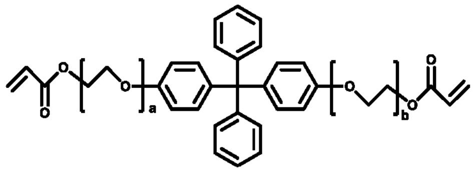
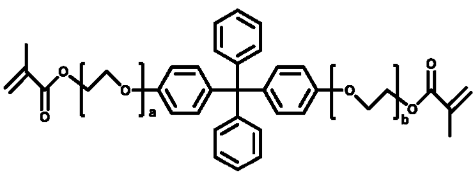
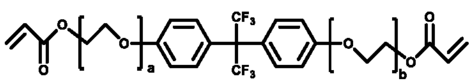
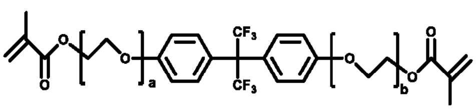
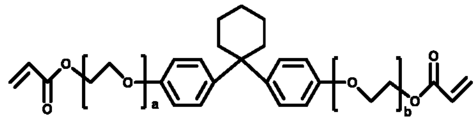
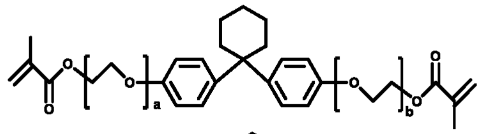
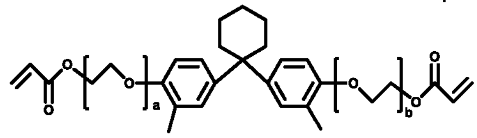
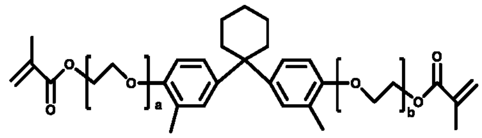
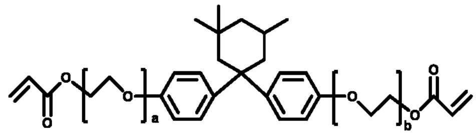
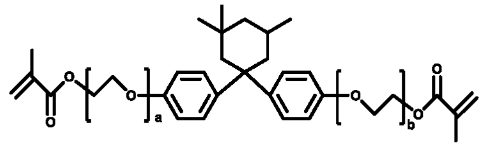
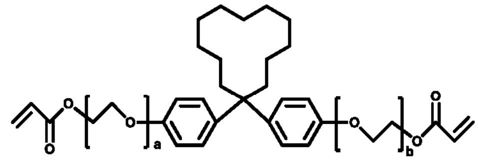
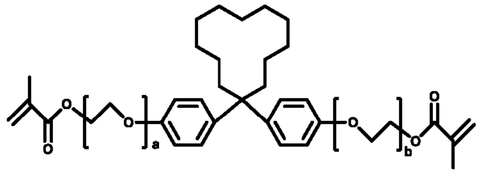

In the above structural formulae, each of a and b is an integer from 0 to 20.

According to an embodiment of the present specification, each of Z3 and Z4, which are identical or different, is independently a $C_{1-30}$ linear or branched alkylene group.

According to an embodiment of the present specification, each of Z3 and Z4, which are identical or different, is independently a $C_{1-20}$ linear or branched alkylene group.

According to an embodiment of the present specification, each of Z3 and Z4, which are identical or different, is independently a $C_{1-10}$ linear or branched alkylene group.

According to an embodiment of the present specification, Z3 and Z4 are ethylene groups.

According to an embodiment of the present specification, X7 is C=O.

According to an embodiment of the present specification, X8 is C=O.

According to an embodiment of the present specification, X7 is a $C_{1-30}$ linear or branched alkylene group.

According to an embodiment of the present specification, X7 is a $C_{1-10}$ linear or branched alkylene group.

According to an embodiment of the present specification, X7 is a $C_{1-4}$ linear or branched alkylene group.

According to an embodiment of the present specification, X7 is a methylene group or an ethylene group.

According to an embodiment of the present specification, X8 is a $C_{1-30}$ linear or branched alkylene group.

According to an embodiment of the present specification, X8 is a $C_{1-10}$ linear or branched alkylene group.

According to an embodiment of the present specification, X8 is a $C_{1-4}$ linear or branched alkylene group.

According to an embodiment of the present specification, X8 is a methylene group or an ethylene group.

According to an embodiment of the present specification, X9 is O.

According to an embodiment of the present specification, X10 is O.

According to an embodiment of the present specification, X11 is O.

According to an embodiment of the present specification, X12 is O.

According to an embodiment of the present specification, X9 is S.

According to an embodiment of the present specification, X10 is S.

According to an embodiment of the present specification, X11 is S.

According to an embodiment of the present specification, X12 is S.

According to an embodiment of the present specification, each of Y3 and Y4, which are identical or different, is independently hydrogen or a $C_{1-30}$ linear or branched alkyl group.

According to an embodiment of the present specification, each of Y3 and Y4, which are identical or different, is independently hydrogen or a $C_{1-10}$ linear or branched alkyl group.

According to an embodiment of the present specification, each of Y3 and Y4, which are identical or different, is independently hydrogen or a $C_{1-4}$ linear or branched alkyl group.

According to an embodiment of the present specification, each of Y3 and Y4, which are identical or different, is independently hydrogen or a $C_{1-4}$ linear alkyl group.

According to an embodiment of the present specification, each of Y3 and Y4, which are identical or different, is independently hydrogen or a methyl group.

According to an embodiment of the present specification, each of A3 and A4, which are identical or different, is independently CRR'. The definitions of R and R' are the same as described above.

In an embodiment of the present specification, the terminal becomes La if p is 0, and La is combined in the form of a dimer, trimer, tetramer, etc. if p is 2 or greater.

According to an embodiment of the present specification, the unit represented by Chemical Formula 2 includes a unit derived from one or more of the following compounds.

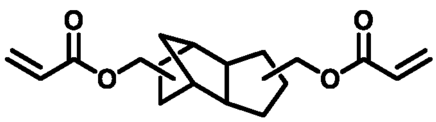

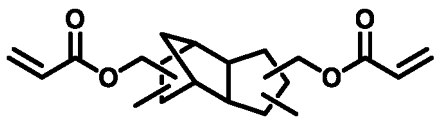

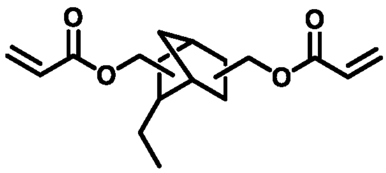

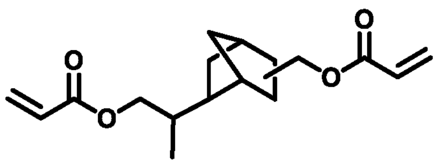

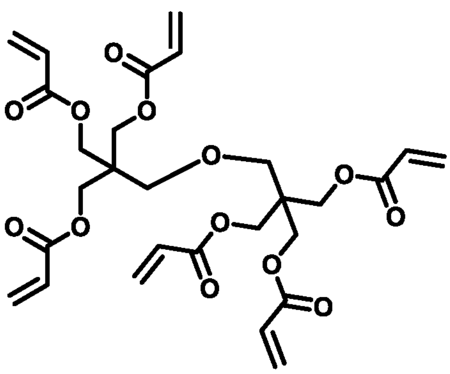

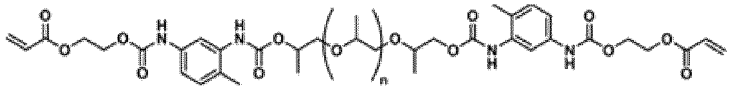

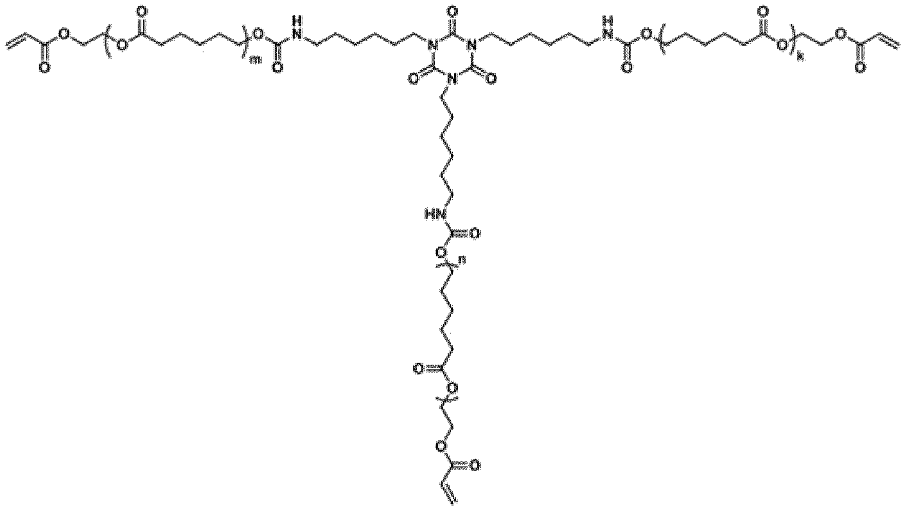

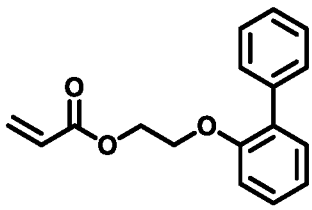

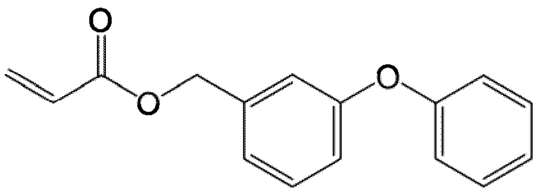

In the above structural formulae, each of m, n, and k is an integer from 0 to 20.

In an embodiment of the present specification, the resin composition may further contain a resin containing a unit represented by Chemical Formula 3.

[Chemical Formula 3]

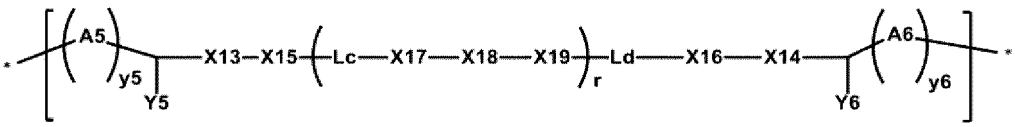

In Chemical Formula 3,

each of Y5 and Y6, which are identical or different, is independently hydrogen, a substituted or unsubstituted alkyl group, or a substituted or unsubstituted aryl group,
each of X13 and X14, which are identical or different, is independently C=O or a substituted or unsubstituted alkylene group,
each of X15, X16, X17 and X19, which are identical or different, is independently O or S,
X18 is C=O,

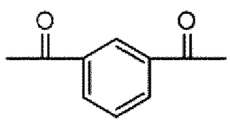

or

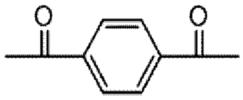

,

r is an integer from 0 to 6, and the structures within the parentheses are identical or different if r is 2 or greater,

y5 and y6 are integers from 1 to 20, and the structures in the parentheses are identical or different if y5 and y6 are 2 or greater,

each of A5 and A6, which are identical or different, is independently CRR',

each of R and R', which are identical or different, is independently hydrogen; a substituted or unsubstituted alkyl group; a substituted or unsubstituted heteroalkyl group; a substituted or unsubstituted aryl group; or a substituted or unsubstituted heteroaryl group,

* is a moiety connected to the main chain of the resin,

each of Lc and Ld is selected from the following structural formulae,

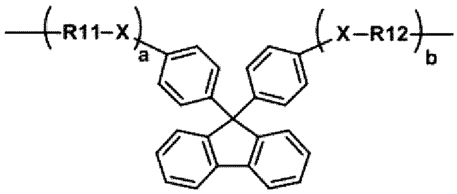

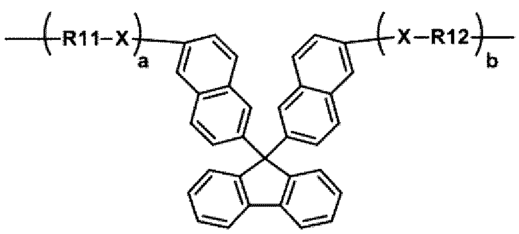

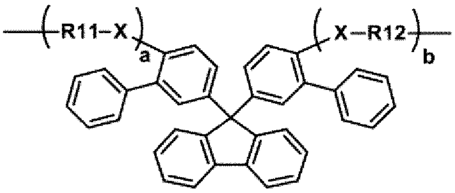

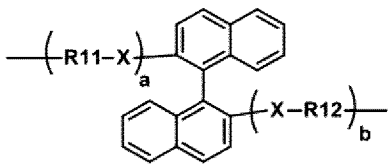

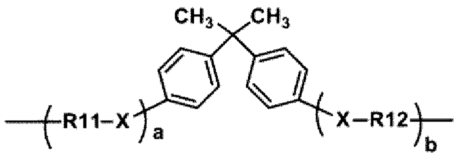

Wherein in structural formulae,

each X is independently O or S,

each of R11 and R12, which are identical or different, is independently a substituted or unsubstituted alkylene group, or a substituted or unsubstituted cycloalkylene group, and

each of a and b is an integer from 0 to 50, and the structures within the parentheses are identical or different if each of a and b is 2 or greater.

In an embodiment of the present specification, it can be seen from by the Lorentz-Lorenz formula that the resin containing the unit represented by Chemical Formula 1 increases refractive index by increasing the electron density of a molecule and reducing the molecular volume. Also, since the core structure of Chemical Formula 1 is a derivative of BHEBN (2,2'-bis(2-hydroxyethoxy)-1,1'-binaphthalene) and BPA (bisphenol A), it can improve the refractive index of the resin due to a small molecular volume and superior packing ability. Additionally, the core structure of Chemical Formula 1, which is a fluorene-based structure, exhibits anisotropic optical properties and, therefore, has low birefringence. Additionally, it has a high refractive index due to high electron density. Therefore, the resin composition according to an embodiment of the present specification has a high refractive index and high transparency, and an optical lens, optical film or optical resin using the same can exhibit a thin thickness and excellent optical properties.

In an embodiment of the present specification, the UV stabilizer includes three or more types.

In an embodiment of the present specification, the UV stabilizer may include three or more types selected from an oxamide-based UV absorber, a benzophenone-based UV absorber, a triazine-based UV absorber and an HALS (hindered amine light stabilizer)-based UV absorber.

The oxamide-based UV absorber may be one or more selected from a group consisting of N-(2-ethoxyphenyl)-N'-(2-ethylphenyl) (Tinuvin 312), 4,4'-dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide and 2-ethoxy-5,4'-di-t-butyl-2'-ethyloxanilide.

The benzophenone-based UV absorber may be one or more selected from a group consisting of 2-hydroxybenzophenone, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane and 2,2',4,4'-tetrahydroxybenzophenone.

The triazine-based UV absorber may be one or more selected from a group consisting of 6-[4,6-bis(4-phenylphenyl)-1,2-dihydro-1,3,5-triazin-2-ylidene]-3-[(2-ethylhexyl)oxy]cyclohexa-2,4-dien-1-one (Tinuvin 1600), 6-methylheptyl 2-[4-[4,6-bis(4-phenylphenyl)-1H-1,3,5-triazin-2-ylidene]-3-oxocyclohexa-1,5-dien-1-yl]oxypropanoate (Tinuvin 479), 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-butoxyphenyl)-1,3,5-triazine, 2,6-diphenyl-4-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-benzyloxyphenyl)-1,3,5-triazine, 2,4,6-tris(2-hydroxy-4-octyloxyphenyl)-1,3,5-triazine, 2,4,6-tris(2-hydroxy-4-benzyloxyphenyl)-1,3,5-triazine, 2,4,6-tris(2-hydroxy-4-ethoxyethoxyphenyl)-1,3,5-triazine, 2,4,6-tris(2-hydroxy-4-butoxyethoxyphenyl)-1,3,5-triazine, 2,4,6-tris(2-hydroxy-4-methoxycarbonylpropyloxyphenyl)-1,3,5-triazine, 2,4,6-tris(2-hydroxy-3-methyl-4-ethoxyphenyl)-1,3,5-triazine, 2,4,6-tris(2-hydroxy-3-methyl-4-hexyloxyphenyl)-1,3,5-triazine, 2,4,6-tris(2-hydroxy-3-methyl-4-ethoxyethoxyphenyl)-1,3,5-triazine, 2,4,6-tris(2-hydroxy-3-methyl-4-ethoxycarbonylethyloxyphenyl)-1,3,5-triazine, 2,4-bis(2,4-dimethylphenyl)-6-(2-hydroxy-4-N-octyloxyphenyl)-1,3,5-triazine and 2-(4,6-diphenyl-1,3,5-triazin-2-yl)-5-(2-(2-ethylhexanoyloxy)ethoxy)phenol.

The HALS-based UV absorber may be one or more selected from a group consisting of Tinuvin 5866, 4-[2-(4-hydroxy-2,2,6,6-tetramethylpiperidin-1-yl)ethoxy]-4-oxobutanoic acid (Tinuvin 622), bis(1,2,2,6,6-pentamethyl-4-piperidinyl)-[[3,5-bis(1,1-dimethylethyl)-4-hydroxyphenyl]methyl]butyl malonate (Tinuvin 144), bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(N-octoxy-2,2,6,6-tetramethyl-4-piperidyl)sebacate, bis(N-benzyloxy-2,2,6,6-tetramethyl-4-piperidyl)sebacate, bis(N-cyclohexyloxy-2,2,6,6-tetramethyl-4-piperidyl) sebacate, bis(1,2,2,6,6-pentamethyl-4-piperidyl)2-(3,5-di-t-butyl-4-hydroxybenzyl)-2-butyl malonate, bis(1-acryloyl-2,2,6,6-tetramethyl-4-piperidyl)2,2-bis(3,5-dit-butyl-4-hydroxybenzyl)-2-butyl malonate, bis(1,2,2,6,6-pentamethyl-4-piperidyl)decanedioate, 2,2,6,6-tetramethyl-4-piperidyl methacrylate, 4-[3-(3,5-di-t-butyl-4-hydroxyphenyl)propionyl oxy]-1-[2-(3-(3,5-di-t-butyl-4-hydroxyphenyl)propionyl oxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl)1,2,3,4-butanetetracarboxylate, tetrakis(1,2,2,6,6-pentamethyl-4-piperidyl) 1,2,3,4-butanetetracarboxylate, a mixed ester of 1,2,3,4-butanetetracarboxylic acid and 1,2,2,6,6-pentamethyl-4-piperidinol and 1-tridecanol, a mixed ester of 1,2,3,4-butanetetracarboxylic acid and 2,2,6,6-tetramethyl-4-piperidinol and 1-tridecanol, a mixed ester of 1,2,3,4-butanetetracarboxylic acid, 1,2,2,6,6-pentamethyl-4-piperidinol and 3,9-bis(2-hydroxy-1,1-dimethylethyl)-2,4,8,10-tetraoxaspiro[5·5]undecane, a mixed ester of 1,2,3,4-butanetetracarboxylic acid, 2,2,6,6-tetramethyl-4-piperidinol and 3,9-bis(2-hydroxy-1,1-dimethylethyl)-2,4,8,10-tetraoxaspiro[5·5]undecane, a polycondensate of dimethyl succinate and 1-(2-hydroxyethyl)-4-hydroxy-2,2,6,6-tetramethylpiperidine, poly[(6-morpholino-1,3,5-triazine-2,4-diyl) ((2,2,6,6-tetramethyl-4-piperidyl)imino)hexamethylene((2,2,6,6-tetramethyl-4-piperidyl)imino)], poly [(6-(1,1,3,3-tetramethylbutyl)imino-1,3,5-triazine-2,4-diyl)((2,2,6,6-tetramethyl-4-piperidyl)imino)hexamethylene((2,2,6,6-tetramethyl-4-piperidyl)imino)], a polycondensate of N,N'-bis(2,2,6,6-tetramethyl-4-piperidyl)hexamethylenediamine and 1,2-dibromoethane, N,N',4,7-tetrakis[4,6-bis(N-butyl-N-(2,2,6,6-tetramethyl-4-piperidyl)amino)-1,3,5-triazin-2-yl]-4,7-diazadecane-1,10-diamine, N,N',4-tris[4,6-bis(N-butyl-N-(2,2,6,6-tetramethyl-4-piperidyl)amino)-1,3,5-triazin-2-yl]-4,7-diazadecane-1,10-diamine, N,N',4,7-tetrakis[4,6-bis(N-butyl-N-(1,2,2,6,6-pentamethyl-4-piperidyl)amino)-1,3,5-triazin-2-yl]-4,7-diazadecane-1,10-diamine, and N,N',4-tris[4,6-bis(N-butyl-N-(1,2,2,6,6-pentamethyl-4-piperidyl)amino)-1,3,5-triazin-2-yl]-4,7-diazadecane-1,10-diamine.

In an embodiment of the present specification, the content of the UV stabilizer may be 0.1 to 20 parts by weight or 1 to 10 parts by weight based on 100 parts by weight of the total weight of the resin containing the unit represented by Chemical Formula 1 and the resin containing the unit represented by Chemical Formula 2. When the content of the UV stabilizer satisfies the above range, both optical properties and ultraviolet blocking effects can be excellent. If the content of the UV stabilizer is below 0.1 part by weight, it is difficult to attain sufficient ultraviolet light resistance with the UV stabilizer. And, if the content of the UV stabilizer exceeds 20 parts by weight, it is undesirable because transparency may decrease as the yellowness index of the resin composition increases above the reference value.

In particular, in an embodiment of the present specification, the UV stabilizer may include three or more types, four or more types, or five or more types selected from the following compounds.

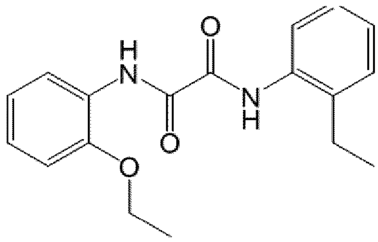

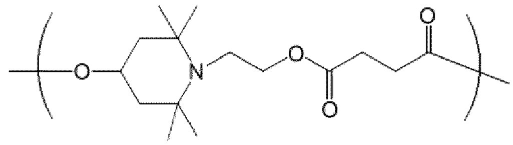

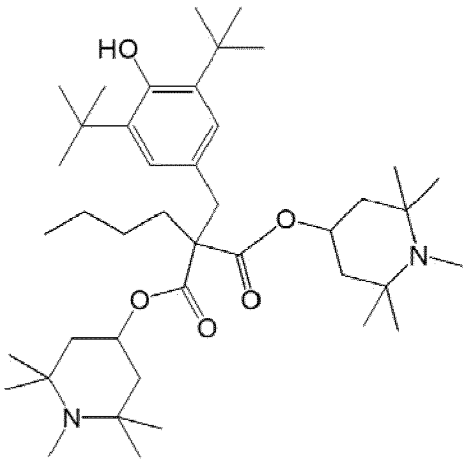

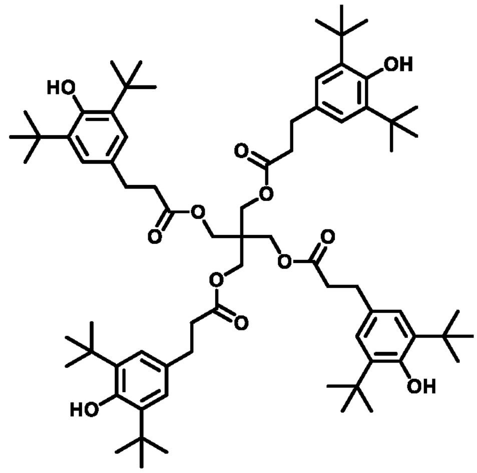

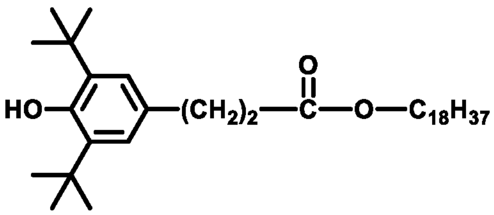

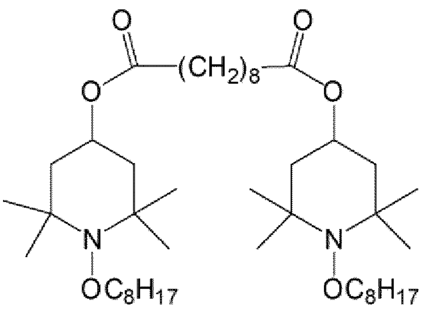

In an embodiment of the present specification, the resin composition may further inlclude a photoinitiator.

The photoinitiator is a compound that generates active species upon irradiation of an active energy ray. The active energy ray can be defined as an energy ray that can generate active species by decomposing a compound that generates the active species. Examples of the active energy ray may include light energy rays such as visible light, ultraviolet, infrared, X-ray, α-ray, β-ray, γ-ray, etc. Specifically, ultraviolet ray may be used as the active energy ray in that it has a constant energy level and a fast curing rate.

The photoinitiator may include a benzophenone-based photoinitiator, an acetophenone-based photoinitiator, a triazine-based photoinitiator, a thioxanthone-based photoinitiator, a benzoin-based photoinitiator, a phosphorus-based photoinitiator, an oxime-based photoinitiator, or a mixture thereof. However, photoinitiators commonly used in the art may be used without being limited thereto.

Specific examples of the benzophenone-based photoinitiator include benzophenone, benzoyl benzoate, methylbenzoyl benzoate, 4-phenylbenzophenone, hydroxybenzophenone, acrylated benzophenone, 4,4'-bis(dimethylamino)benzophenone, 4,4'-dichlorobenzophenone, 3,3'-dimethyl-2-methoxybenzophenone, or mixtures thereof. However, benzophenone-based photoinitiators commonly used in the art may be used without being limited thereto. Specific examples of the acetophenone-based photoinitiator include acetophenone, 2,2-dimethylpropiophenone, 3-hydroxy-3-methyl-1-phenylbutan-1-one, 2,2-dimethoxy-2-phenylacetophenone, 2-hydroxy-2-methyl-1-phenylpropan-1-one, 1-hydroxycyclohexyl phenyl ketone (Irgacure 184), 2,4,6-trimethylbenzoyl diphenylphosphine oxide (Irgacure TPO), 2-methyl-1-[4-(methylthio)phenyl]-2-morpholinopropan-1-one, phenylbis(2,4,6-trimethylbenzoyl)phosphine oxide, 2-(dimethylamino)-1-[4-(morpholinyl)phenyl]-2-phenylmethyl-1-butanone, 2-hydroxy-2-methyl-[4-(1-methylvinyl)phenyl]propanol oligomer, 2,2'-diethoxyacetophenone, 2,2'-dibutoxyacetophenone, 2-hydroxy-2-methylpropiophenone, p-t-butyltrichloro acetophenone, p-t-butyldichloro acetophenone, 4-chloroacetophenone, 2,2'-dichloro-4-phenoxyacetophenone, 2-methyl-1-(4-(methylthio)phenyl)-2-morpholino propan-1-one, 2-benzyl-2-dimethyl amino-1-(4-morpholino phenyl)-butan-1-one, 2-hydroxy-1-{4-[4-(2-hydroxy-2-methyl-propionyl)-benzyl]-phenyl}-2-methylpropan-1-one (Irgacure 127), and a mixture thereof. However, acetophenone-based photoinitiators commonly used in the art may be used without being limited thereto.

Specific examples of the triazine-based photoinitiator include 2,4,6-trichloro-s-triazine, 2-phenyl-4,6-bis(trichloromethyl)-s-triazine, 2-(3',4'-dimethoxystyryl)-4,6-bis(trichloromethyl)-s-triazine, 2-(4'-methoxynaphthyl)-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-biphenyl-4,6-bis(trichloromethyl)-s-triazine, bis(trichloromethyl)-6-styryl-s-triazine, 2-(naphtho-1-yl)-4,6-bis(trichloromethyl)-s-triazine, 2-(4-methoxynaphtho-1-yl)-4,6-bis(trichloromethyl)-s-triazine, 2,4-trichloromethyl(piperonyl)-6-triazine, 2,4-(trichloromethyl(4'-methoxystyryl)-6-triazine, or a mixture thereof. However, triazine-based photoinitiators commonly used in the art may be used without being limited thereto.

Specific examples of the thioxanthone-based photoinitiator include thioxanthone, 2-methylthioxanthone, isopropylthioxanthone, 2,4-diethylthioxanthone, 2,4-diisopropylthioxanthone, 2-chlorothioxanthone, or a mixture thereof. However, thioxanthone-based photoinitiators commonly used in the art may be used without being limited thereto.

Specific examples of the benzoin-based photoinitiator include benzoin, benzoin methyl ether, benzoin ethyl ether, benzoin isopropyl ether, benzoin isobutyl ether, benzyl dimethyl ketal, or a mixture thereof. However, benzoin-based photoinitiators commonly used in the art may be used without being limited thereto.

Specific examples of the phosphorus-based photoinitiator include bisbenzoylphenyl phosphine oxide, benzoyldiphenyl phosphine oxide, or a mixture thereof. However, phosphorus-based photoinitiators commonly used in the art may be used without being limited thereto.

Specific examples of the oxime-based photoinitiator include 2-(o-benzoyloxime)-1-[4-(phenylthio)phenyl]-1,2-octanedione and 1-(o-acetyloxime)-1-[9-ethyl-6-(2-methylbenzoyl)-9H-carbazole-3-yl]ethanone, (1-hydroxycyclohexyl)(phenyl)methanone O-acetyloxime, or a mixture thereof. However, oxime-based photoinitiators commonly used in the art may be used without being limited thereto.

According to an embodiment of the present specification, the photoinitiator is represented by Chemical Formula P.

[Chemical Formula P]

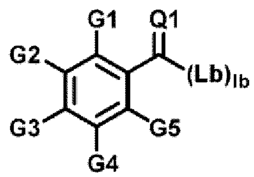

In Chemical Formula P,

Q1 is O or NG6,
each of G1 to G6, which are identical or different, is independently hydrogen; a substituted or unsubstituted ester group; a substituted or unsubstituted alkyl group; a substituted or unsubstituted aryl group; or a substituted or unsubstituted heteroaryl group,
Lb is hydrogen; a substituted or unsubstituted alkyl group; a substituted or unsubstituted alkoxy group; a substituted or unsubstituted cycloalkyl group; a substituted or unsubstituted heteroalkyl group; a substituted or unsubstituted phosphine oxide group; a substituted or unsubstituted aryl group; or a substituted or unsubstituted heteroaryl group,
lb is an integer from 1 to 10, and
two or more Lb's are identical or different if lb is 2 or greater.

In particular, in an embodiment of the present specification, the photoinitiator may include the following compound.

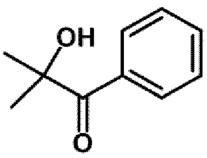

In an embodiment of the present specification, the curing wavelength of the resin containing the unit represented by Chemical Formula 1 and the resin containing the unit represented by Chemical Formula 2 is about 330 nm to 350 nm.

Therefore, a UV stabilizer that absorbs UV at wavelengths above 350 nm can be effective when exposed to UV radiation. That is, if the UV stabilizer absorbs UV in the range of 330 nm to 350 nm, curing of the resin composition may not occur, which is undesirable.

In an embodiment of the present specification, the refractive index of the resin composition measured at a wavelength of 587 nm may be 1.5 or higher, 1.55 to 1.70, or 1.60 to 1.65. When the resin composition satisfies the refractive index described above, it is possible to prepare a thin and lightweight optical lens.

In an embodiment of the present specification, the Abbe number of the resin composition measured and calculated at wavelengths of 486 nm, 587 nm and 656 nm may be 10 to 40. It may be specifically 15 to 38, more specifically 20 to 35, and even more specifically 24.9 to 30.1. When the resin composition satisfies the Abbe number range, dispersion may be reduced and clarity may be improved when it is applied to molded products such as optical lenses.

Specifically, the Abbe number can be calculated from the following equation after measuring refractive indices ($n_D$, $n_F$ and $n_C$) at wavelengths D (587 nm), F (486 nm) and C (656 nm) at 25 °C, respectively.

$$\text{Abbe number} = (n_D - 1) / (n_F - n_C)$$

The refractive index can be measured using a prism coupler. For example, Sairon Technology's SPA-3DR may be used, although not being limited thereto.

After placing the resin on a heating plate at 200 °C, the change in the amount of light reflected from the flattened sample may be measured using a prism coupler. When the prepared sample is contacted with the prism and a laser is irradiated to the prism, most of the light undergoes total internal reflection. But, if specific incident angle and conditions are satisfied, an evanescent field is generated at the boundary and the light is coupled. By measuring the angle at which the intensity of light detected by a detector decreases suddenly due to the coupling, the prism coupler can automatically calculate the refractive index of the film from the parameters related to the polarization mode of the light and the refractive indices of the prism and the substrate.

Another embodiment of the present specification provides an article containing the resin composition or a cured product thereof. The article may include coating materials, curable materials, lens materials, optical substrate materials, etc., although not being limited thereto.

[Mode for Invention]

<Examples>

<Examples 1 to 8 and Comparative Examples 1 to 9>

After mixing the components listed in Tables 1 to 3 at the specified content ratios, 3 parts by weight of a photoinitiator of the following structural formula was added and the mixture was stirred.

[Photoinitiator]

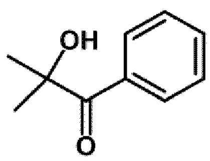

The prepared mixture was coated on a 400-μm thick polycarbonate bare film, and then a 20-μm thick coating layer was formed by irradiating UV. The coating of the mixture was performed using a micrometer film applicator.

[Table 1]

| Components | Contents (parts by weight) | | | | | |
|---|---|---|---|---|---|---|
| | Comp. Ex. 1 | Comp. Ex. 2 | Comp. Ex. 3 | Ex. 1 | Ex. 2 | Ex. 3 |
| BABN | 6.15 | 6.15 | 6.15 | 6.15 | 6.15 | 6.15 |
| PPEA | 43.04 | 43.04 | 43.04 | 43.04 | 43.04 | 43.04 |

(continued)

| Components | Contents (parts by weight) | | | | | |
|---|---|---|---|---|---|---|
| | Comp. Ex. 1 | Comp. Ex. 2 | Comp. Ex. 3 | Ex. 1 | Ex. 2 | Ex. 3 |
| BPAAEG3 | 32.37 | 32.37 | 32.37 | 32.37 | 32.37 | 32.37 |
| COA | 12.3 | 12.3 | 12.3 | 12.3 | 12.3 | 12.3 |
| TriAU | 6.14 | 6.14 | 6.14 | 6.14 | 6.14 | 6.14 |
| UV stabilizer (1) | - | - | - | 1.7 | 1.7 | 2.9 |
| UV stabilizer (2) | - | - | 5 | 0.6 | 0.6 | 1.0 |
| UV stabilizer (3) | - | - | - | 0.7 | 0.7 | 1.2 |
| UV stabilizer (4) | - | - | - | - | 2 | - |
| UV stabilizer (5) | - | - | - | - | 2 | - |
| UV stabilizer (6) | - | 3 | - | - | - | - |

[Table 2]

| Components | Contents (parts by weight) | | | | |
|---|---|---|---|---|---|
| | Comp. Ex. 4 | Comp. Ex. 5 | Comp. Ex. 6 | Ex. 4 | Ex. 5 |
| BPEFA | 29.73 | 29.73 | 29.73 | 29.73 | 29.73 |
| BABN | 6.66 | 6.66 | 6.66 | 6.66 | 6.66 |
| PPEA | 46.67 | 46.67 | 46.67 | 46.67 | 46.67 |
| PBA | 16.94 | 16.94 | 16.94 | 16.94 | 16.94 |
| UV stabilizer (1) | - | - | - | 1.7 | 2.9 |
| UV stabilizer (2) | - | - | 5 | 0.6 | 1.0 |
| UV stabilizer (3) | - | - | - | 0.7 | 1.2 |
| UV stabilizer (4) | - | - | - | 2 | - |
| UV stabilizer (5) | - | - | - | 2 | - |
| UV stabilizer (6) | - | 3 | - | - | - |

[Table 3]

| Components | Contents (parts by weight) | | | | | |
|---|---|---|---|---|---|---|
| | Comp. Ex. 7 | Comp. Ex. 8 | Comp. Ex. 9 | Ex. 6 | Ex. 7 | Ex. 8 |
| BABN | 6.66 | 6.66 | 6.66 | 6.66 | 6.66 | 6.66 |
| PPEA | 46.67 | 46.67 | 46.67 | 46.67 | 46.67 | 46.67 |
| BPAMAEG3 | 40 | 40 | 40 | 40 | 40 | 40 |
| BPAAEG10 | 6.67 | 6.67 | 6.67 | 6.67 | 6.67 | 6.67 |
| UV stabilizer (1) | - | - | - | 1.7 | 1.7 | 2.9 |
| UV stabilizer (2) | - | - | 5 | 0.6 | 0.6 | 1.0 |
| UV stabilizer (3) | - | - | - | 0.7 | 0.7 | 1.2 |
| UV stabilizer (4) | - | - | - | - | 2 | - |
| UV stabilizer (5) | - | - | - | - | 2 | - |
| UV stabilizer (6) | - | 3 | - | - | - | - |

[BPEFA]

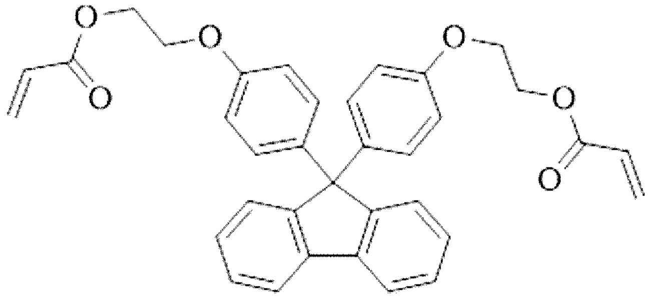

[BABN]

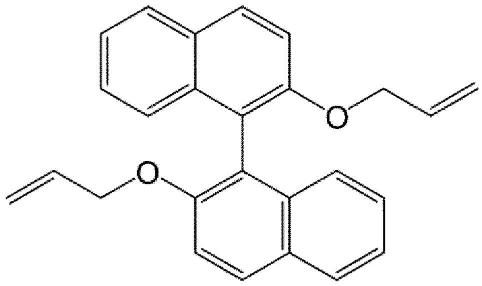

[PPEA]

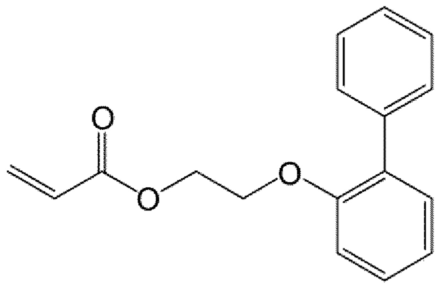

[PBA]

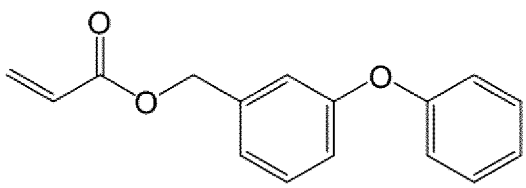

[BPAAEG3]

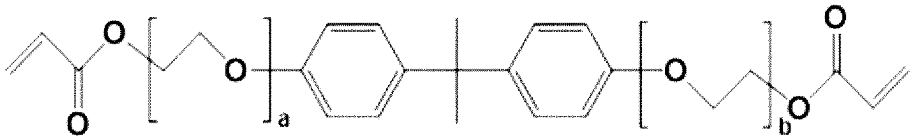

a+b=3

[BPAMAEG3]

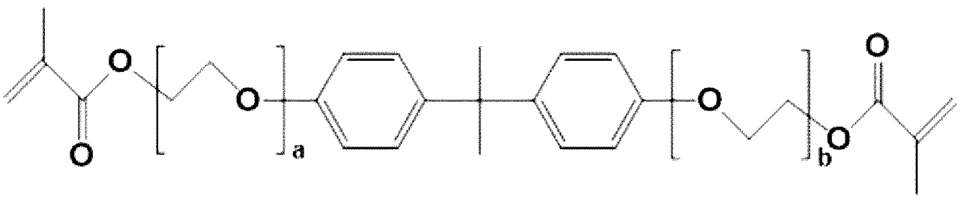

a+b=3

[BPAAEG10]

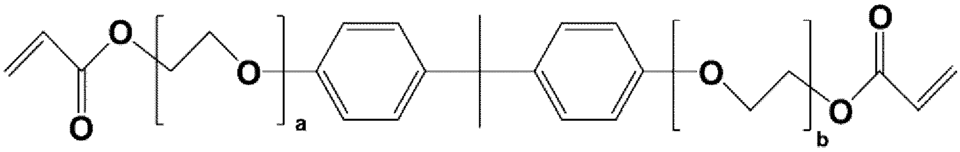

a+b=10

[COA]

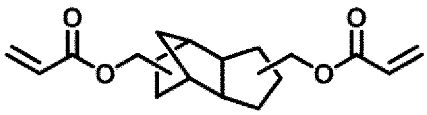

[TriAU]

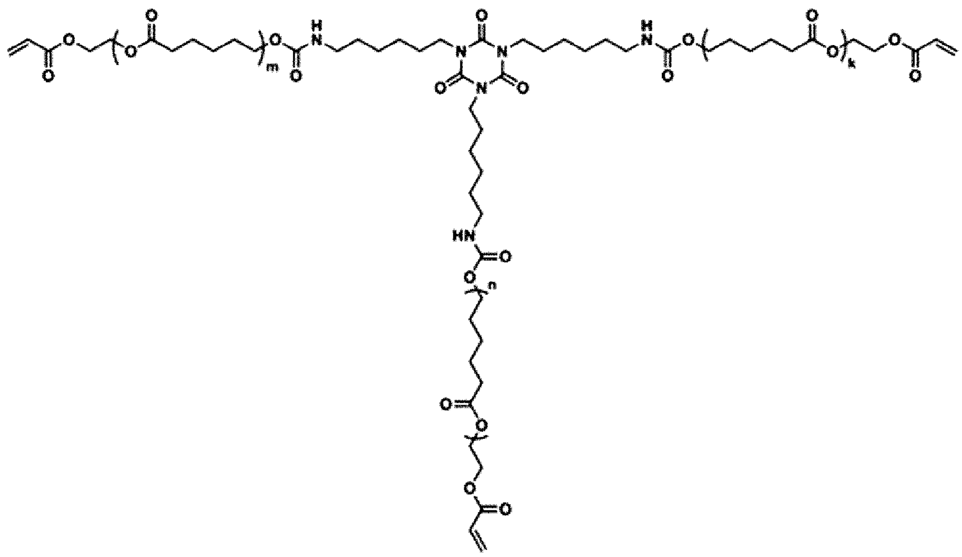

[UV stabilizer (1)]

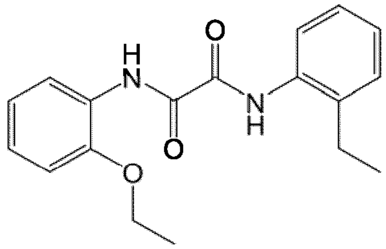

[UV stabilizer (2)]

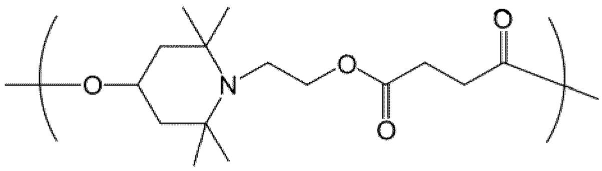

[UV stabilizer (3)]

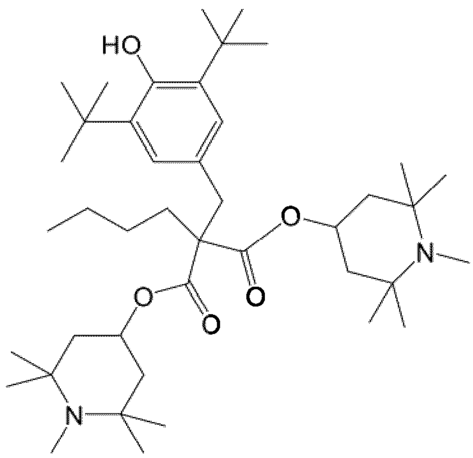

[UV stabilizer (4)]

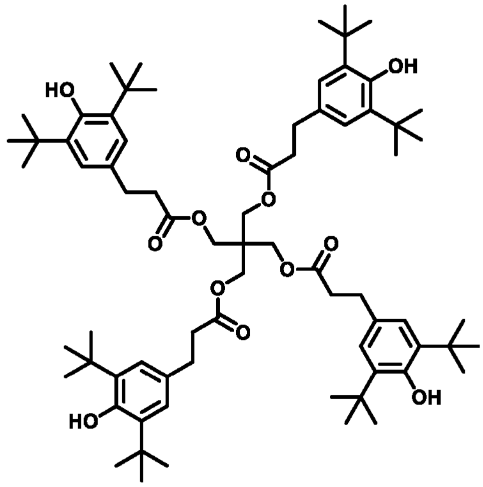

[UV stabilizer (5)]

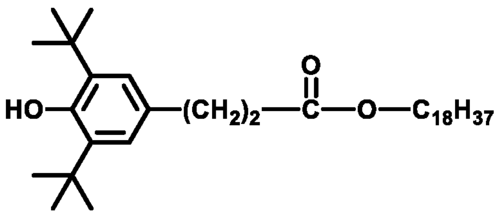

[UV stabilizer (6)]

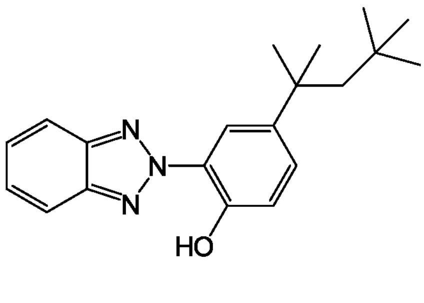

<Test Example 1>

The properties of the resin compositions prepared in the examples and comparative examples were evaluated and shown in Table 4 and Table 5.

[Table 4]

| | Viscosity (cPs, at 25 °C) | Refractive index (at 587nm) | Abbe number |
|---|---|---|---|
| Example 1 | 780 | 1.584 | 29.94 |
| Example 2 | 705 | 1.584 | 29.61 |
| Example 3 | 638.2 | 1.585 | 29.83 |
| Example 4 | 1040 | 1.616 | 25.93 |
| Example 5 | 1183 | 1.619 | 24.85 |
| Example 6 | 462 | 1.585 | 27.01 |
| Example 7 | 510 | 1.585 | 30.03 |
| Example 8 | 482 | 1.586 | 28.85 |
| Comparative Example 1 | 561 | 1.585 | 31.11 |
| Comparative Example 2 | Curing did not occur | | |
| Comparative Example 3 | Opaque due to no dissolution of UV stabilizer | | |
| Comparative Example 4 | 940 | 1.621 | 28.19 |
| Comparative Example 5 | Curing did not occur | | |
| Comparative Example 6 | Opaque due to no dissolution of UV stabilizer | | |
| Comparative Example 7 | 393.8 | 1.585 | 30.03 |
| Comparative Example 8 | Curing did not occur | | |
| Comparative Example 9 | Opaque due to no dissolution of UV stabilizer | | |

[Table 5]

| | 0 day | | | | 1 day | | | | |
|---|---|---|---|---|---|---|---|---|---|
| | YI | L | a* | b* | YI | L | a* | b* | Eab |
| Ex. 1 | 1.44 | 96.55 | -0.27 | 0.75 | 10.56 | 95.99 | -1.63 | 6.19 | 7.09 |
| Ex. 2 | 1.76 | 96.61 | -0.34 | 0.94 | 12.48 | 96.65 | -1.88 | 7.37 | 8.42 |
| Ex. 3 | 1.64 | 96.53 | -0.29 | 0.86 | 10.93 | 95.90 | -1.66 | 6.41 | 7.42 |
| Ex. 4 | 1.29 | 96.71 | -0.28 | 0.67 | 14.03 | 95.59 | -1.96 | 8.24 | 9.14 |
| Ex. 5 | 2.10 | 96.10 | -0.27 | 1.09 | 9.17 | 96.04 | -1.47 | 5.36 | 6.56 |
| Ex. 6 | 1.91 | 96.10 | -0.24 | 0.98 | 11.98 | 95.81 | -1.78 | 7.03 | 8.16 |
| Ex. 7 | 1.91 | 96.28 | -0.31 | 1.01 | 7.82 | 96.10 | -1.33 | 4.57 | 5.68 |
| Ex. 8 | 1.99 | 96.11 | -0.25 | 1.02 | 12.02 | 95.74 | -1.72 | 7.02 | 8.18 |
| Comp. Ex. 1 | 2.14 | 96.53 | -0.40 | 1.17 | 15.96 | 95.61 | -2.52 | 9.57 | 10.99 |
| Comp. Ex. 2 | Curing did not occur | | | | | | | | |
| Comp. Ex. 3 | Opaque due to no dissolution of UV stabilizer | | | | | | | | |
| Comp. Ex. 4 | 2.19 | 96.37 | -0.38 | 1.18 | 20.69 | 95.10 | -3.06 | 12.50 | 14.00 |
| Comp. Ex. 5 | Curing did not occur | | | | | | | | |
| Comp. Ex. 6 | Opaque due to no dissolution of UV stabilizer | | | | | | | | |
| Comp. Ex. 7 | 2.21 | 96.39 | -0.37 | 1.19 | 14.67 | 95.63 | -2.20 | 8.70 | 10.09 |

(continued)

| | 0 day | | | | 1 day | | | | |
|---|---|---|---|---|---|---|---|---|---|
| | YI | L | a* | b* | YI | L | a* | b* | Eab |
| Comp. Ex. 8 | Curing did not occur | | | | | | | | |
| Comp. Ex. 9 | Opaque due to no dissolution of UV stabilizer | | | | | | | | |

It can be seen that, whereas the resin compositions according to Examples 1 to 8 satisfied the color difference change rate ($Eab_1$) on the first day (n = 1) of UV irradiation, defined by Equation 1, being 10.0 or lower, the color difference change rate ($Eab_1$) of the resin compositions according to Comparative Examples 1, 4 and 7 exceeded 10.0.

Therefore, the resin compositions according to Examples 1 to 8 can be applied to products because the degree of discoloration and deterioration of the resin composition is not significant even when exposed to ultraviolet rays. However, the resin compositions according to Comparative Examples 1, 4 and 7 may undergo serious discoloration and deterioration to the extent that it becomes difficult to apply them to products in fields such as optical mobile devices, vehicles and electronic materials, due to changes in the values of light transmittance at different wavelengths when exposed to ultraviolet rays.

For the resin compositions according to Comparative Examples 2, 5 and 8, curing did not occur because the absorption wavelength (330 nm) of the UV stabilizer (6) and the curing wavelength (330 nm to 350 nm) of the resin composition were the same. And, for the resin compositions according to Comparative Examples 3, 6 and 9, the compositions were opaque because the UV stabilizer was not dissolved. Therefore, they could not be used as optical materials.

## Claims

**1.** A resin composition comprising: a resin comprising a unit represented by Chemical Formula 1;

a resin comprising a unit represented by Chemical Formula 2; and
at least two types of UV stabilizers, wherein
the resin composition exhibits color difference change rate ($Eab_1$) on the first day (n = 1) of ultraviolet irradiation, defined by Equation 1, of 10.0 or lower:

[Equation 1]

$$Eab_n = \{(L_n - L_{n-1})^2 + (a_n - a_{n-1})^2 + (b_n - b_{n-1})^2\}^{1/2}$$

wherein
$L_{n-1}$ is the brightness index of the resin composition on the (n-1)th day of ultraviolet irradiation,
$a_{n-1}$ and $b_{n-1}$ are the color coordinates of the resin composition on the (n-1)th day of UV irradiation,
$L_n$ is the brightness index of the resin composition on the nth day of UV irradiation,
$a_n$ and $b_n$ are the color coordinates of the resin composition on the nth day of UV irradiation,

[Chemical Formula 1]

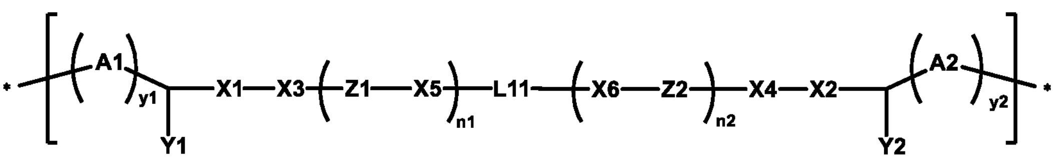

[Chemical Formula 2]

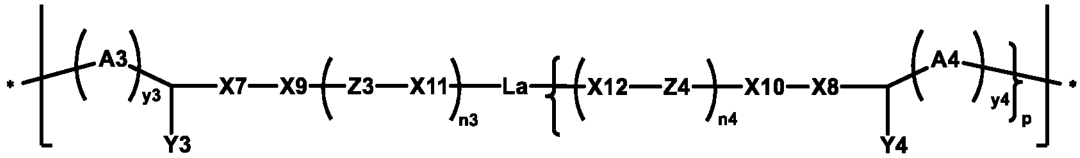

Wherein in Chemical Formulae 1 and 2,
L11 is any one of Chemical Formulae A-1, B-1 and C-1,
each of Y1, Y2, Y3 and Y4, which are identical or different, is independently hydrogen, a substituted or unsubstituted alkyl group, or a substituted or unsubstituted aryl group,
each of X1, X2, X7 and X8, which are identical or different, is independently C=O or a substituted or unsubstituted alkylene group,
each of X3, X4, X5 and X6, which are identical or different, is independently O or S,
each of Z1 and Z2, which are identical or different, is a substituted or unsubstituted alkylene group, a substituted or unsubstituted heteroalkylene group or a substituted or unsubstituted cycloalkylene group,
p is an integer from 0 to 8, and the structures in parentheses are identical or different if p is 2 or greater,
La is a substituted or unsubstituted bivalent or higher alkyl group, a substituted or unsubstituted bivalent or higher cycloalkyl group, a substituted or unsubstituted bivalent or higher heteroalkyl group, a substituted or unsubstituted bivalent or higher aryl group, or a substituted or unsubstituted bivalent or higher heteroaryl group, wherein La is a substituted or unsubstituted alkylene group or a substituted or unsubstituted arylene group if p is 0,
each of X9, X10, X11 and X12, which are identical or different, is independently a bivalent amide group, a bivalent urethane group, a bivalent urea group, a bivalent ester group, O or S,
Z3 and Z4 are either the same or different from each other, and each independently is a substituted or unsubstituted alkylene group, a substituted or unsubstituted heteroalkylene group, a substituted or unsubstituted arylene group, or a substituted or unsubstituted heteroarylene group,
n1, n2, n3, and n4 are integers ranging from 0 to 20, and the structures within each bracket are either identical or different if each of n1, n2, n3 and n4 is 2 or greater,
each of y1, y2, y3, and y4 is an integer from 1 to 20, and the structures in each bracket are the same or different from each other if y1, y2, y3, and y4 are 2 or greater,
each of A1 to A4, which are identical or different, is independently CRR',
each of R and R', which are identical or different, is independently hydrogen; a substituted or unsubstituted alkyl group; a substituted or unsubstituted heteroalkyl group; a substituted or unsubstituted aryl group; or a substituted or unsubstituted heteroaryl group,
* is a moiety connected to the main chain of the resin,

[Chemical Formula A-1]

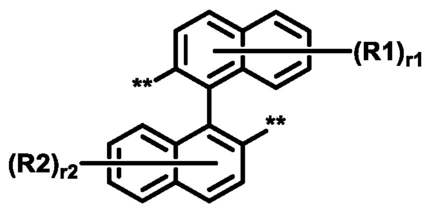

[Chemical Formula B-1]

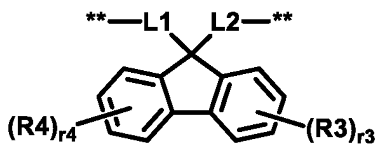

[Chemical Formula C-1]

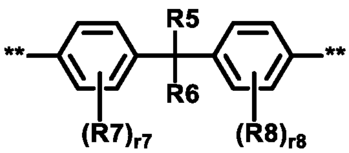

Wherein in Chemical Formulae A-1, B-1 and C-1,
each of L1 and L2, which are identical or different, is independently a substituted or unsubstituted arylene group, or a substituted or unsubstituted heteroarylene group,
each of R1 to R8, which are identical or different, is independently hydrogen, a substituted or unsubstituted alkyl group, a substituted or unsubstituted heteroalkyl group, a substituted or unsubstituted aryl group, a substituted or unsubstituted condensed ring group of an aromatic hydrocarbon ring and an aliphatic hydrocarbon ring, or a substituted or unsubstituted heteroaryl group, wherein adjacent groups may be connected to form a hydrocarbon ring,
each of r1 and r2 is an integer from 0 to 6, wherein the structures within the parentheses are identical or different if each of r1 and r2 is 2 or greater,
each of r3, r4, r7 and r8 is an integer from 0 to 4, wherein the structures within the parentheses are identical or different if each of r3, r4, r7 and r8 is 2 or greater, and
** is a moiety bonded to Chemical Formula 1.

**2.** The resin composition according to claim 1, wherein Chemical Formula 1 is any one of Chemical Formulae 1-1 to 1-3:

[Chemical Formula 1-1]

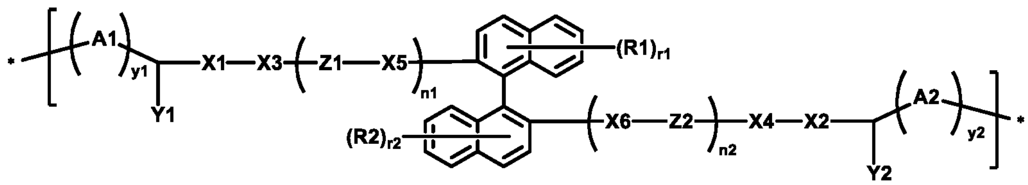

[Chemical Formula 1-2]

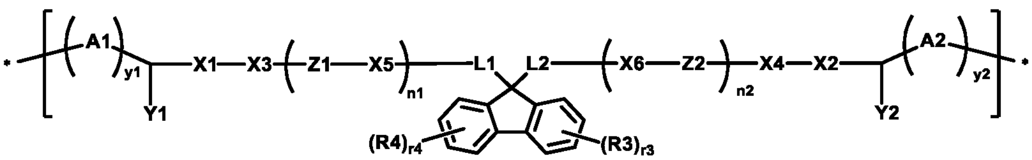

[Chemical Formula 1-3]

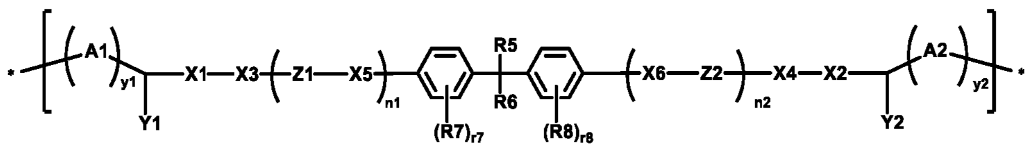

Wherein in Chemical Formulae 1-1 to 1-3,
the definitions of Z1, Z2, X1 to X6, n1, n2, Y1, Y2, y1, y2, A1, A2, and * are the same as in Chemical Formula 1,
the definitions of R1, r1, R2 and r2 are the same as in Chemical Formula A-1,
the definitions of L1, L2, R3, r3 R4 and r4 are the same as in Chemical Formula B-1, and
the definitions of R5 to R8, r7 and r8 are the same as in Chemical Formula C-1.

**3.** The resin composition according to claim 1, wherein the unit represented by Chemical Formula 2 comprises a unit derived from one or more of the following compounds:

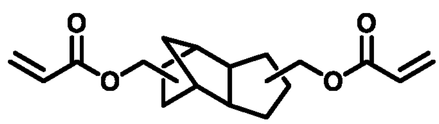
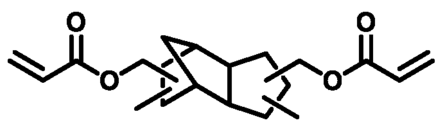

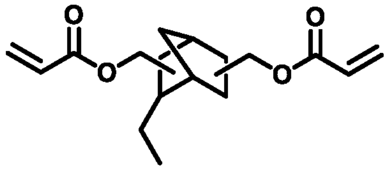 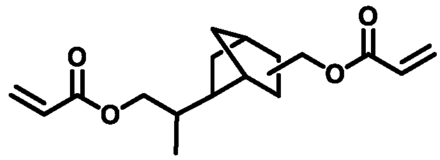

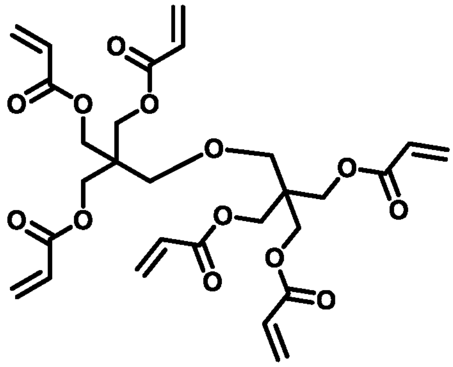

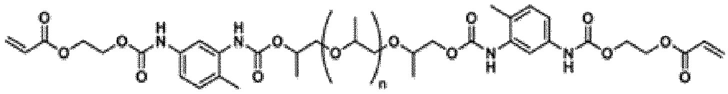

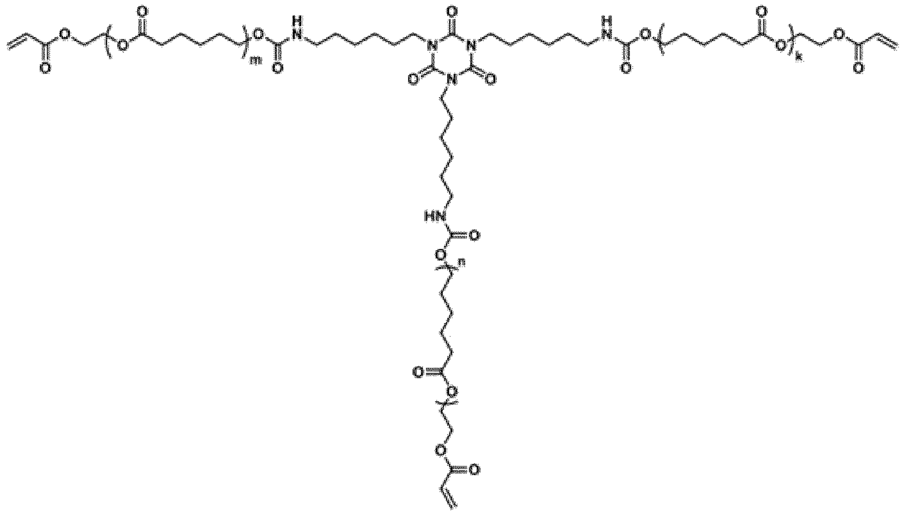

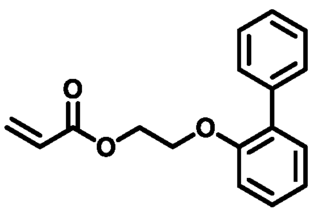 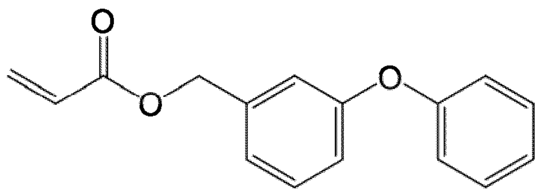

wherein in structural formulae, each of m, n and k is an integer from 0 to 20.

**4.** The resin composition according to claim 1, wherein the UV stabilizer comprises three or more types.

**5.** The resin composition according to claim 1, wherein the UV stabilizer comprises three or more types selected from the following compounds:

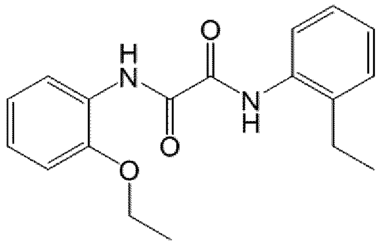

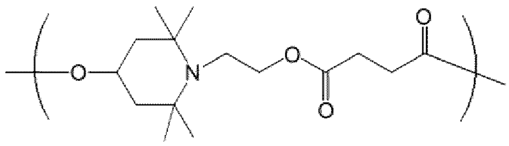

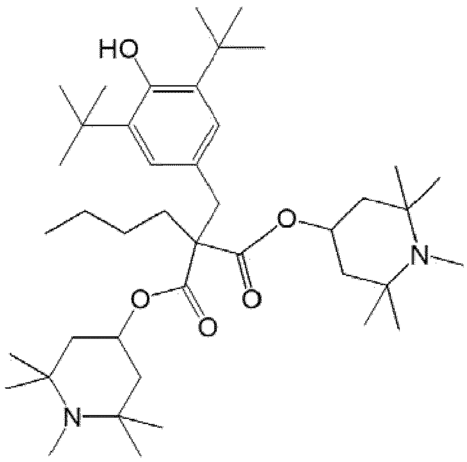

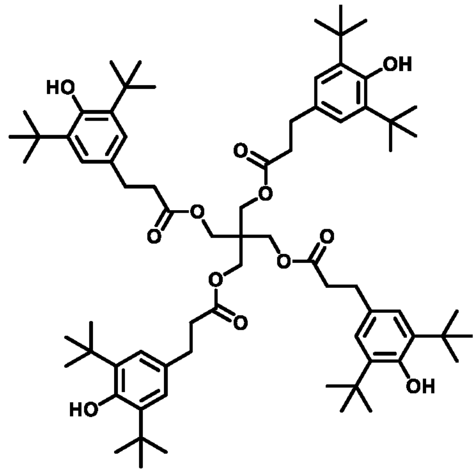

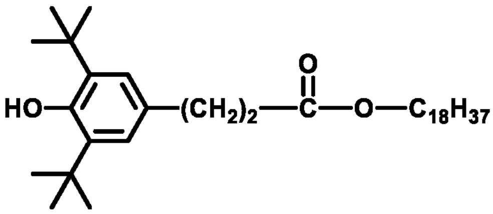

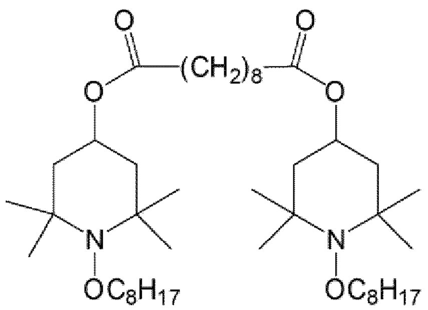

6. The resin composition according to claim 1, wherein the unit represented by Chemical Formula 1 comprises a unit derived from any one or more of the following compounds:

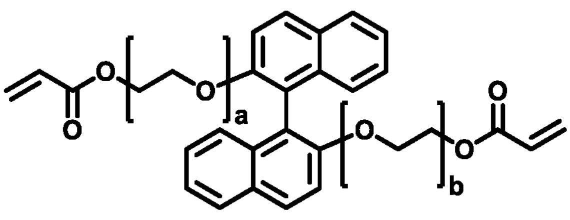

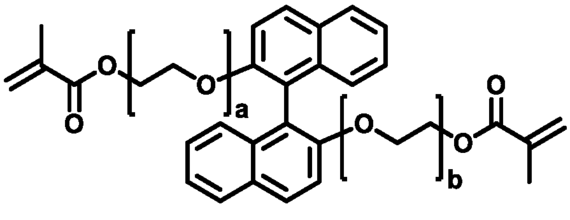

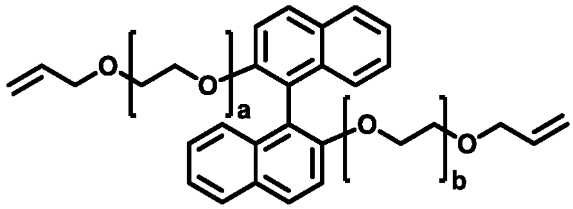

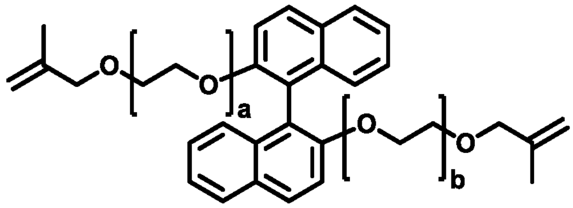

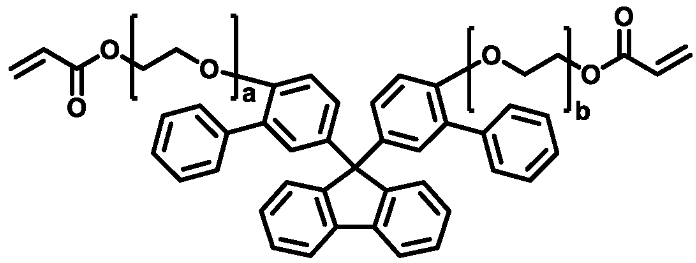

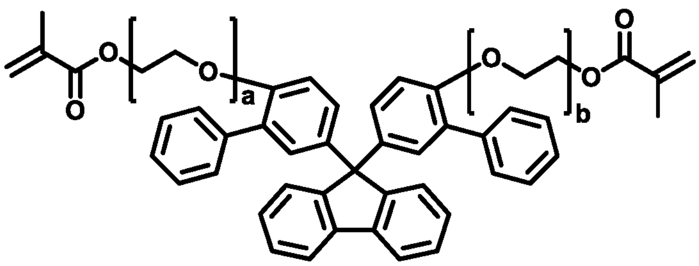

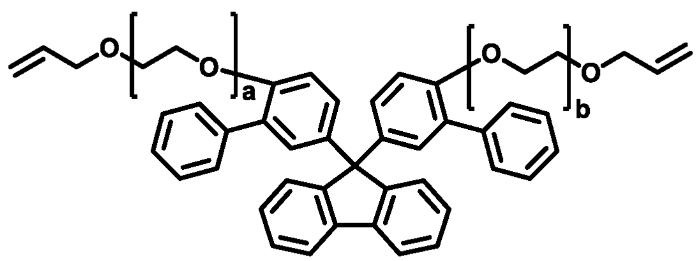

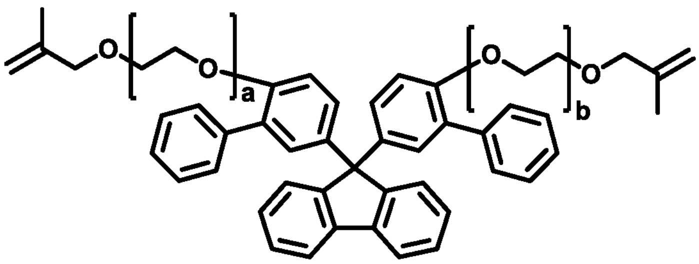

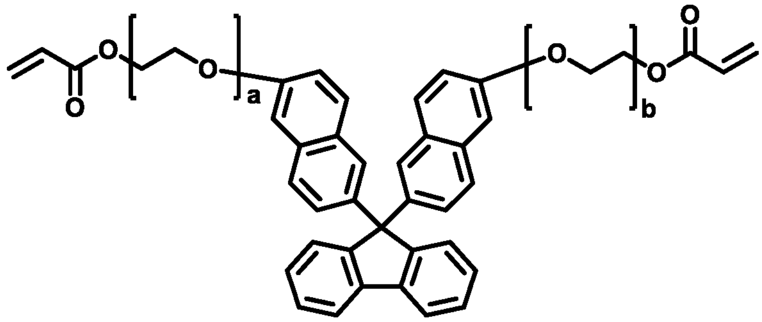

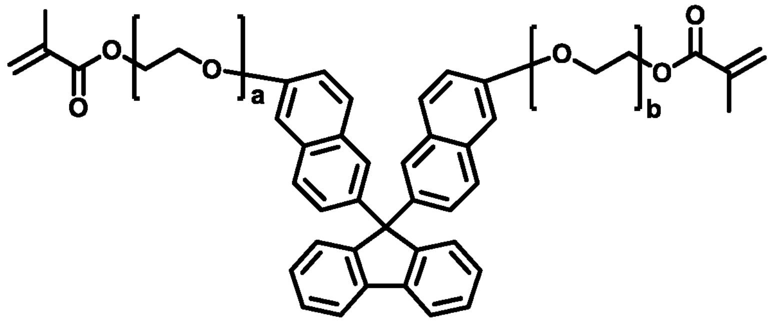

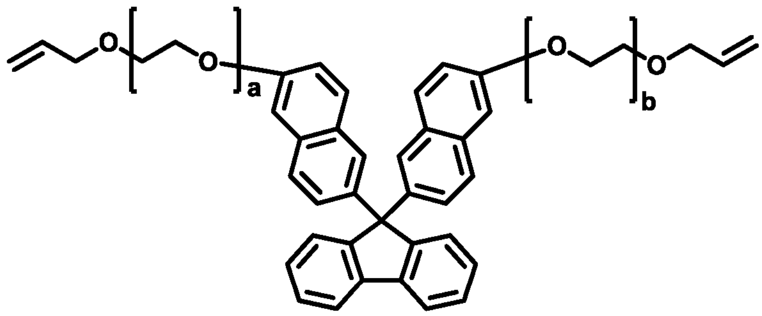

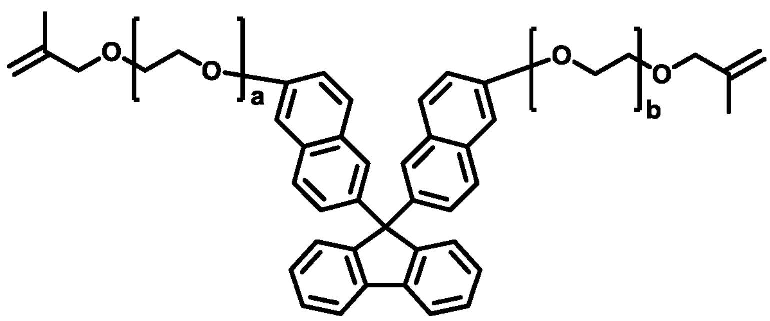

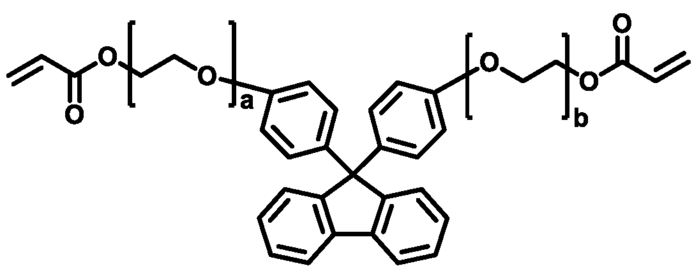

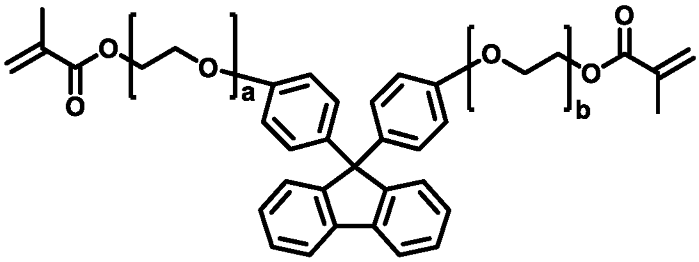

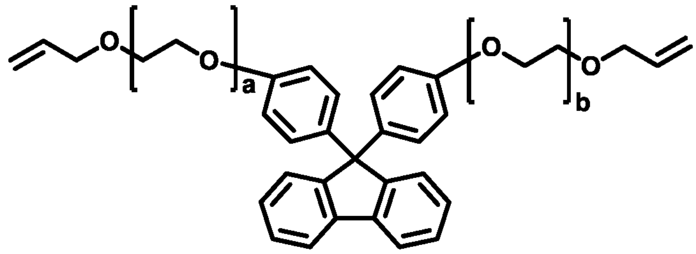

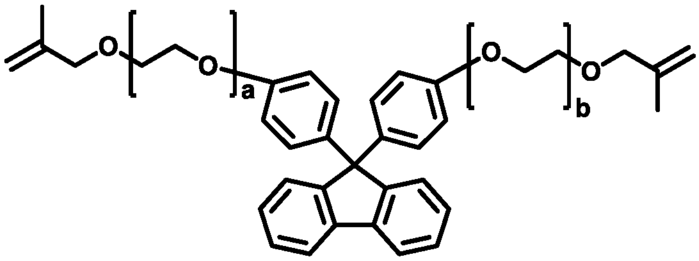

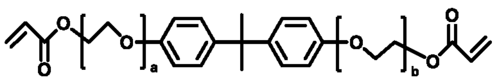

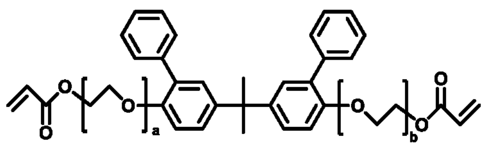

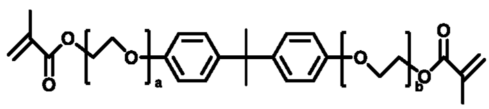

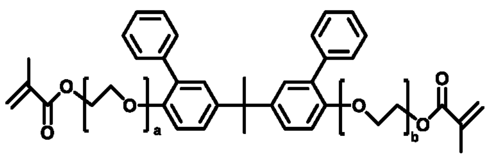

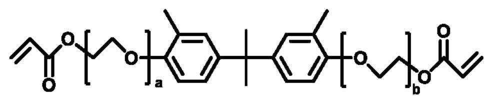

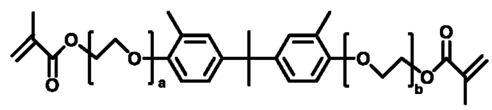

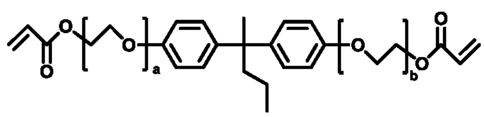

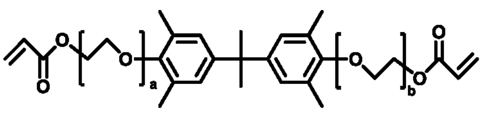

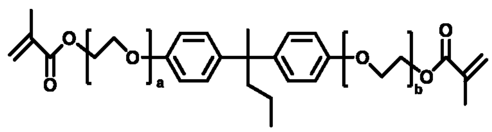

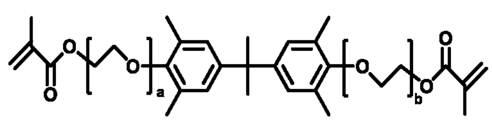

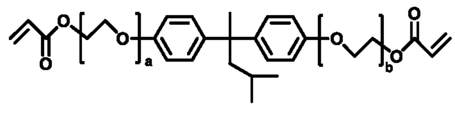

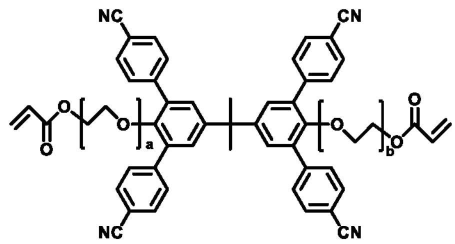

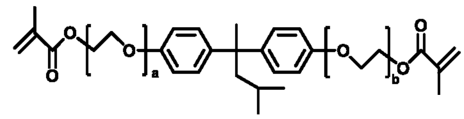

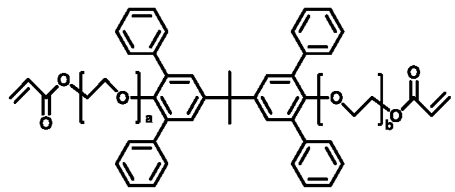

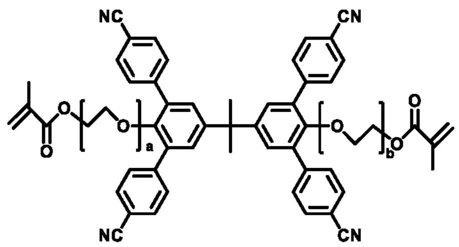

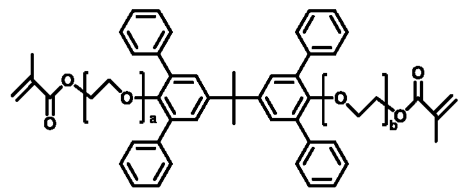

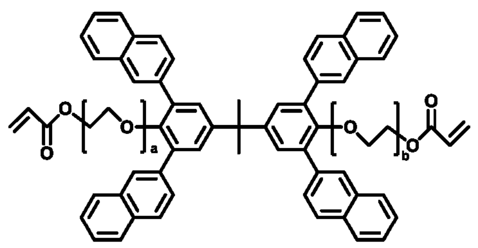

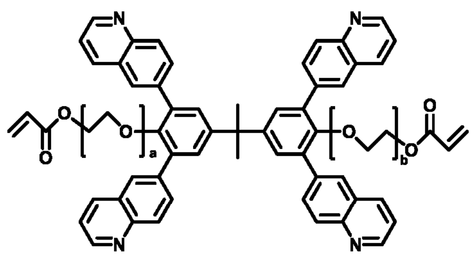

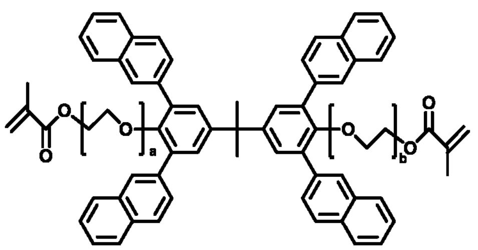

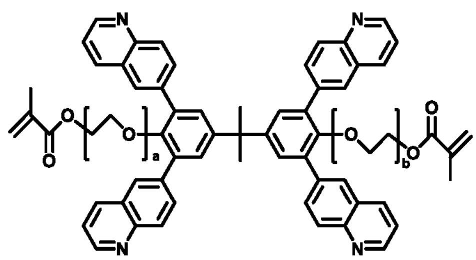

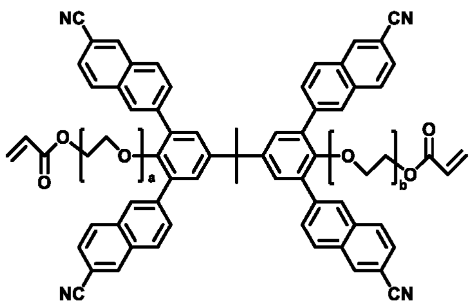

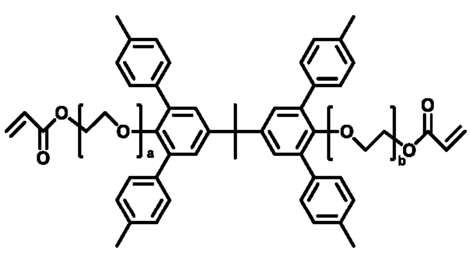

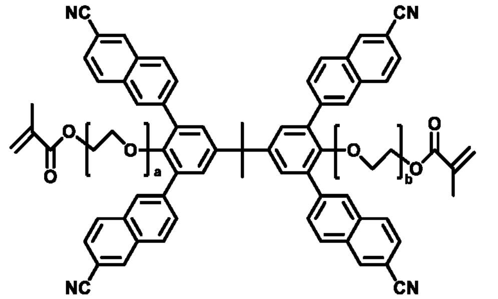

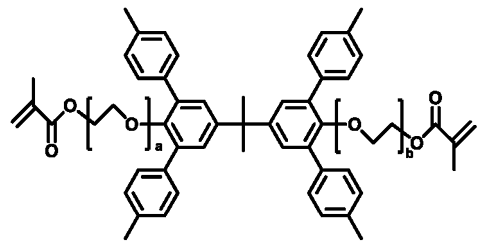

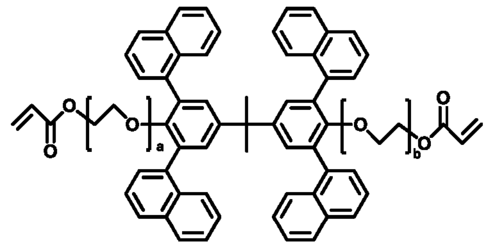

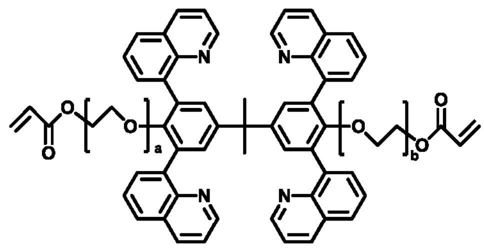

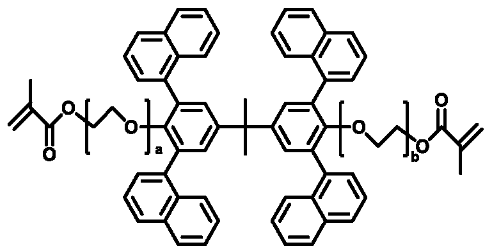

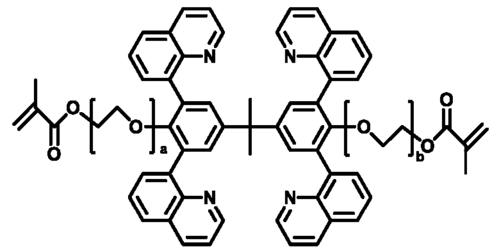

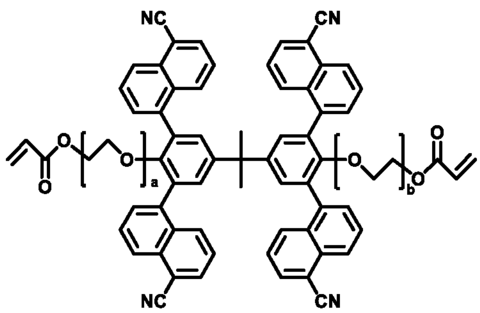

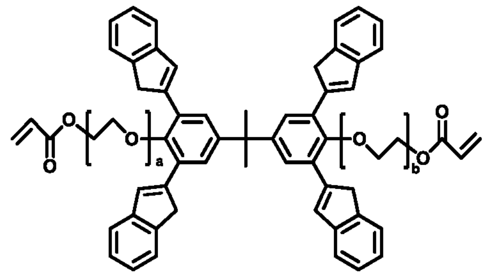

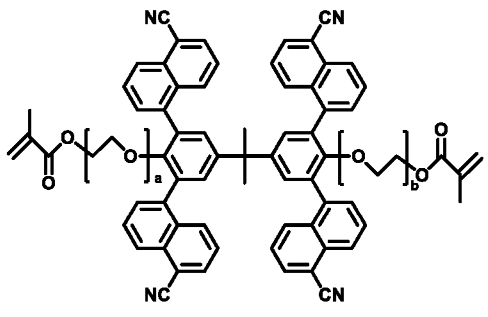

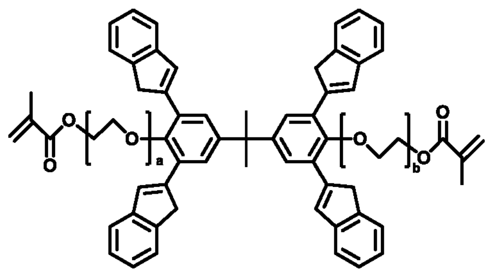

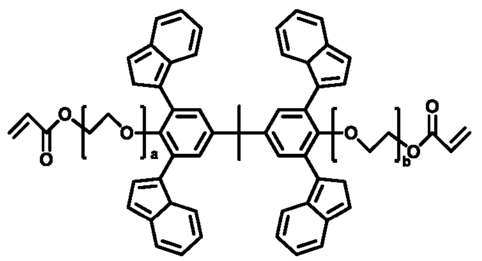

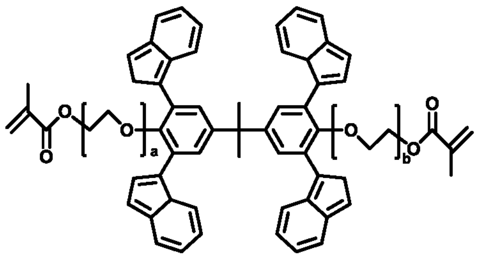

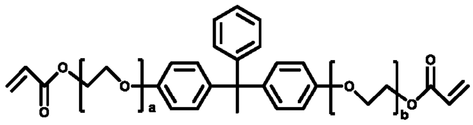

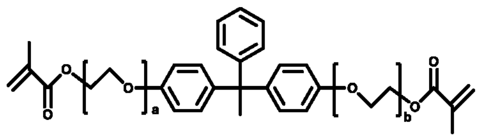

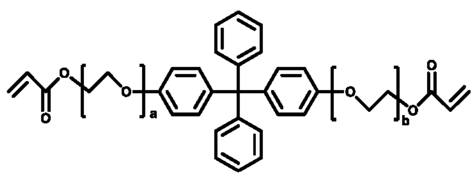

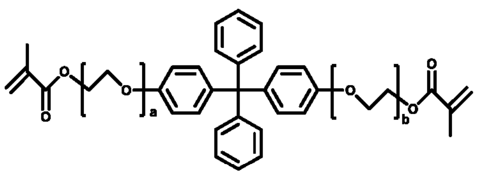

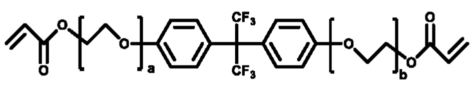

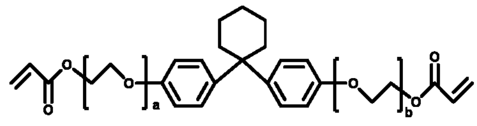

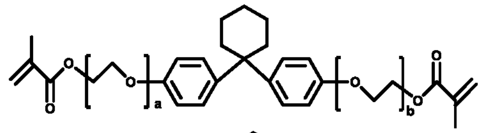

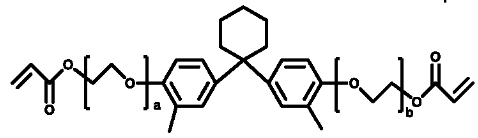

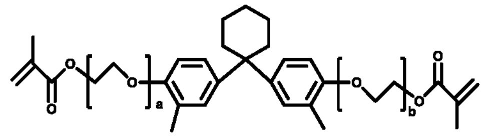

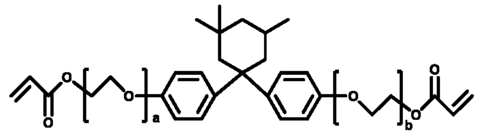

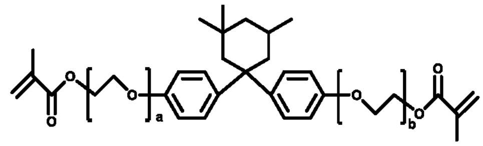

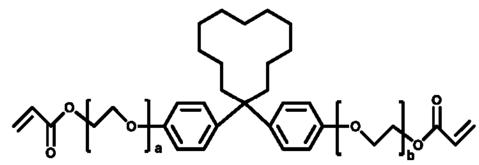

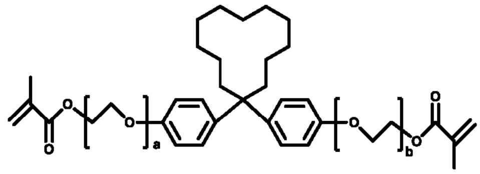

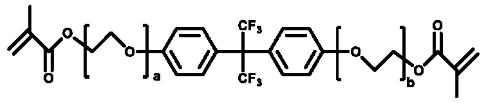

wherein in structural formulae each of a and b is an integer from 0 to 20.

7. The resin composition according to claim 1, wherein the resin composition further comprises a photoinitiator.

8. The resin composition according to claim 1, wherein the refractive index of the resin composition measured at 587 nm is 1.5 or higher.

9. The resin composition according to claim 1, wherein the resin composition further comprises a resin comprising a unit

represented by Chemical Formula 3:

[Chemical Formula 3]

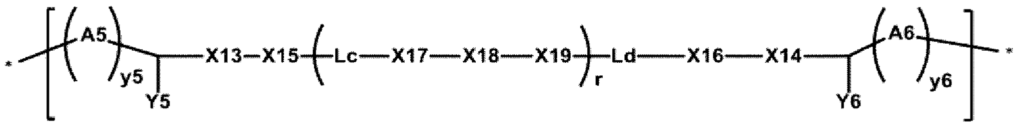

Wherein in Chemical Formula 3,

each of Y5 and Y6, which are identical or different, is independently hydrogen, a substituted or unsubstituted alkyl group, or a substituted or unsubstituted aryl group,
each of X13 and X14, which are identical or different, is independently C=O or a substituted or unsubstituted alkylene group,
each of X15, X16, X17 and X19, which are identical or different, is independently O or S,
X18 is C=O,

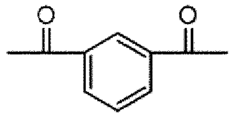

or

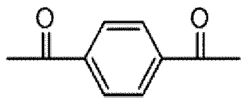

,

r is an integer from 0 to 6, and the structures in the parentheses are identical or different if r is 2 or greater,
y5 and y6 are integers from 1 to 20, and the structures in the parentheses are identical or different if y5 and y6 are 2 or greater,
each of A5 and A6, which are identical or different, is independently CRR',
each of R and R', which are identical or different, is independently hydrogen; a substituted or unsubstituted alkyl group; a substituted or unsubstituted heteroalkyl group; a substituted or unsubstituted aryl group; or a substituted or unsubstituted heteroaryl group,
* is a moiety connected to the main chain of the resin,
each of Lc and Ld is selected from the following structural formulae,

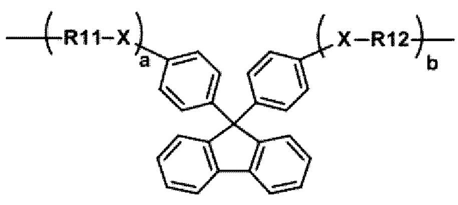

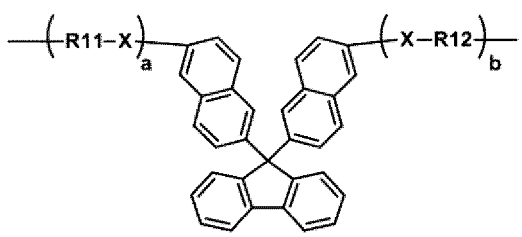

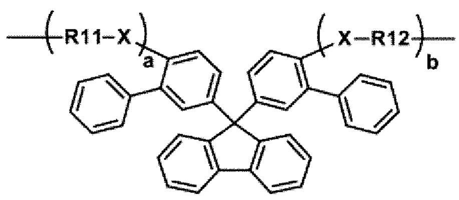

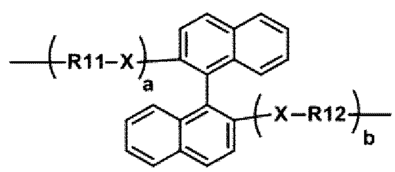

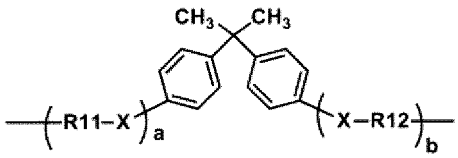

Wherein in structural formulae,
each X is independently O or S,
each of R11 and R12, which are identical or different, is independently a substituted or unsubstituted alkylene group, or a substituted or unsubstituted cycloalkylene group, and
each of a and b is an integer from 0 to 50, and the structures within the parentheses are identical or different if each of a and b is 2 or greater.

**10.** The resin composition according to claim 1, wherein the content of the UV stabilizer is 0.1 to 20 parts by weight based on 100 parts by weight of the total weight of the resin comprising the unit represented by Chemical Formula 1 and the resin comprising the unit represented by Chemical Formula 2.

**11.** An article comprising the resin composition according to any one of claims 1 to 10 or a cured product thereof.

**INTERNATIONAL SEARCH REPORT**

International application No. **PCT/KR2024/096150**

**A. CLASSIFICATION OF SUBJECT MATTER**

**C08F 220/30**(2006.01)i; **C08F 222/10**(2006.01)i; **C08F 216/12**(2006.01)i; **C08F 2/44**(2006.01)i; **C08F 2/50**(2006.01)i; **C08K 5/20**(2006.01)i; **C08K 5/3432**(2006.01)i

According to International Patent Classification (IPC) or to both national classification and IPC

**B. FIELDS SEARCHED**

Minimum documentation searched (classification system followed by classification symbols)

C08F 220/30(2006.01); B32B 27/16(2006.01); B32B 27/30(2006.01); C08F 2/44(2006.01); C08F 220/10(2006.01); C08F 255/10(2006.01); C08F 290/06(2006.01); C08G 63/185(2006.01); C08L 23/22(2006.01); C08L 33/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 수지(resin), 모노머(monomer), 단위(unit), 자외선 안정제 (ultraviolet stabilizer), 광 개시제(photoinitiator), 물품(article)

**C. DOCUMENTS CONSIDERED TO BE RELEVANT**

| Category* | Citation of document, with indication, where appropriate, of the relevant passages | Relevant to claim No. |
|---|---|---|
| X | US 2021-0292458 A1 (3M INNOVATIVE PROPERTIES COMPANY) 23 September 2021 (2021-09-23)<br>See paragraphs [0002], [0003], [0018], [0028], [0054], [0055], [0058], [0086], [0095], [0100] and [0101]; and tables 1B and 3. | 1-11 |
| X | KR 10-2010-0094369 A (NIPPON KAYAKU KABUSHIKI KAISHA) 26 August 2010 (2010-08-26)<br>See claims 1-4 and 7; paragraphs [0040], [0048], [0050], [0051], [0062] and [0097]; and example 1. | 1-11 |
| X | KR 10-2016-0030077 A (NIPPON KAYAKU KABUSHIKI KAISHA) 16 March 2016 (2016-03-16)<br>See claims 1, 8, 9, 11, 12, 14, 15 and 18; paragraphs [0021], [0024], [0026]-[0033], [0037], [0040], [0104]-[0109], [0146], [0165] and [0168]; and table 1 (example 8). | 1-11 |
| Y | JP 2013-227390 A (NIPPON KAYAKU CO., LTD.) 07 November 2013 (2013-11-07)<br>See claims 1, 5, 14 and 15; paragraphs [0023], [0024], [0030], [0059], [0063] and [0072]; and table 1 (example 4). | 1-11 |

✓ Further documents are listed in the continuation of Box C. ✓ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2025** | **09 January 2025** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2024/096150

C. DOCUMENTS CONSIDERED TO BE RELEVANT

| Category* | Citation of document, with indication, where appropriate, of the relevant passages | Relevant to claim No. |
|---|---|---|
| Y | JP 2019-217779 A (DEXERIALS CORP.) 26 December 2019 (2019-12-26)<br>See claims 1, 8 and 12; and paragraphs [0014] and [0081]-[0094]. | 1-11 |

Form PCT/ISA/210 (second sheet) (July 2022)

**INTERNATIONAL SEARCH REPORT**
**Information on patent family members**

International application No.
**PCT/KR2024/096150**

| Patent document cited in search report | Publication date (day/month/year) | Patent family member(s) | Publication date (day/month/year) |
|---|---|---|---|
| US 2021-0292458 A1 | 23 September 2021 | CN 112424245 A | 26 February 2021 |
| | | CN 112424245 B | 17 September 2024 |
| | | EP 3820920 A2 | 19 May 2021 |
| | | TW 202012477 A | 01 April 2020 |
| | | TW I840382 B | 01 May 2024 |
| | | US 11643494 B2 | 09 May 2023 |
| | | US 2023-0151133 A1 | 18 May 2023 |
| | | WO 2020-012329 A2 | 16 January 2020 |
| | | WO 2020-012329 A3 | 05 March 2020 |
| KR 10-2010-0094369 A | 26 August 2010 | CN 101805422 A | 18 August 2010 |
| | | CN 101805422 B | 23 October 2013 |
| | | JP 2010-189534 A | 02 September 2010 |
| | | JP 5219084 B2 | 26 June 2013 |
| | | KR 10-1558338 B1 | 07 October 2015 |
| | | TW 201035129 A | 01 October 2010 |
| | | TW I454492 B | 01 October 2014 |
| KR 10-2016-0030077 A | 16 March 2016 | CN 105432142 A | 23 March 2016 |
| | | CN 105432142 B | 13 March 2018 |
| | | JP 2014-229496 A | 08 December 2014 |
| | | JP 6274639 B2 | 07 February 2018 |
| | | KR 10-1846960 B1 | 09 April 2018 |
| | | TW 201510044 A | 16 March 2015 |
| | | TW I623576 B | 11 May 2018 |
| | | WO 2014-189124 A1 | 27 November 2014 |
| JP 2013-227390 A | 07 November 2013 | JP 6057409 B2 | 11 January 2017 |
| JP 2019-217779 A | 26 December 2019 | CN 111741850 A | 02 October 2020 |
| | | EP 3756887 A1 | 30 December 2020 |
| | | JP 2019-142210 A | 29 August 2019 |
| | | JP 6568294 B2 | 28 August 2019 |
| | | TW 201936400 A | 16 September 2019 |
| | | US 2020-0398534 A1 | 24 December 2020 |
| | | WO 2019-163638 A1 | 29 August 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230121554
- KR 1020230127259
- KR 1020230127192
- KR 1020240124634